# EUROPEAN PATENT SPECIFICATION

(11) **EP 4 582 893 B1**
(45) Date of publication and mention of the grant of the patent: **21.10.2026**
(21) Application number: 25150029.4
(22) Date of filing: 02.01.2025
(51) Int. Cl.: G05D 1/224, B64C 39/02, G05D 105/80, G05D 107/13, G05D 109/25

(54) **VEHICLE, CONTROL METHOD FOR VEHICLE, AND CONTROL SYSTEM OF VEHICLE**
FAHRZEUG, STEUERUNGSVERFAHREN FÜR FAHRZEUG UND STEUERUNGSSYSTEM FÜR FAHRZEUG
VÉHICULE, PROCÉDÉ DE COMMANDE POUR VÉHICULE ET SYSTÈME DE COMMANDE DE VÉHICULE

(30) Priority: 03.01.2024 CN 202410010968
(43) Date of publication of application: 09.07.2025
(73) Proprietor: BYD Company Limited, Shenzhen, Guangdong 518118 (CN)
(72) Inventor: QIN, Yaoxuan, Shenzhen, 518118 (CN); ZHAO, Baoqiang, Shenzhen, 518118 (CN); LI, Hanming, Shenzhen, 518118 (CN); HE, Yuan, Shenzhen, 518118 (CN); YOU, Zhiyang, Shenzhen, 518118 (CN)
(74) Representative: Taor, Simon Edward William

(56) References cited:
- WO-A1-2015/180180
- CN-B- 107 943 073
- US-A1- 2022 024 588

## Description

### FIELD

The present invention relates to the field of vehicle technologies, and specifically, to a vehicle, a control method for the vehicle, and a control system of the vehicle.

### BACKGROUND

A user may control an unmanned aerial vehicle through a vehicle in a cabin, so as to learn, through the unmanned aerial vehicle, road information of a traveling road. However, in a control process, the user cannot intuitively perceive a state of the unmanned aerial vehicle, and cannot determine a next control policy for the unmanned aerial vehicle, resulting in relatively low control reliability for the unmanned aerial vehicle. US2022024588 discloses a drone system in which a drone and a movable body operate in coordination with each other, the movable body being capable of moving with the drone aboard and allowing the drone to make a takeoff and a landing. WO2015180180 discloses systems and methods for docking an unmanned aerial vehicle with a vehicle. The UAV may be able to distinguish a companion vehicle from other vehicles in the area and vice versa. The UAV may take off and/or land on the vehicle.

### SUMMARY

The present invention provides a vehicle, a control method for the vehicle, and a control system of the vehicle, so as to resolve a problem of relatively low control reliability of an unmanned aerial vehicle in a related technology.

According to an aspect, a control method for a vehicle is provided as set out in claim 1. Additional features are set out in claims 2 to 17.

According to another aspect, a controller is provided as set out in claim 18.

According to still another aspect, a vehicle is provided as set out in claim 19.

According to yet another aspect, a computer-readable storage medium is provided as set out in claim 20.

According to yet another aspect, a control system is provided as set out in claim 21.

**In** some embodiments, the target device further comprises: a hangar arranged on a vehicle roof and configured to accommodate the unmanned aerial vehicle; and a control instruction for the hangar comprises: one of an unmanned aerial vehicle release instruction or a release cancellation instruction.

**In** some embodiments, a control instruction for the unmanned aerial vehicle comprises: one of a return instruction, a return cancellation instruction, or a landing cancellation instruction; and the state of the unmanned aerial vehicle comprises: one of a takeoff state, a flying state, or a landing state.

In some embodiments, the target device further comprises: a hangar arranged on a vehicle roof and configured to accommodate the unmanned aerial vehicle; the takeoff state comprises: at least one of a state of preparing for takeoff, a state of being taking off, or a takeoff completed state, wherein the state of preparing for takeoff is determined by the vehicle based on a signal used for indicating that releasing of the unmanned aerial vehicle is completed and sent by the hangar; and the landing state comprises: at least one of a state of preparing for landing, a state of being landing, or a landing completed state, wherein the state of preparing for landing is sent to the vehicle after the unmanned aerial vehicle returns to a target position.

In some embodiments, the on-board device comprises: the light emitting assembly, the air outlet assembly, the seat, and the multimedia assembly, and the target signal is used for indicating that the unmanned aerial vehicle is in the state of preparing for takeoff; and the controlling an operating status of an on-board device of the vehicle comprises at least one of the following steps: controlling the light emitting assembly to operate according to a first light emitting effect; controlling the air outlet assembly to operate in a first air outlet mode; adjusting the inclination angle of the seat, wherein an adjusted inclination angle is greater than the inclination angle before the adjustment; or controlling the multimedia assembly to make a sound used for indicating that the unmanned aerial vehicle prepares for takeoff.

In some embodiments, the adjusting the inclination angle of the seat comprises: if it is sensed that the seat has a person, adjusting the inclination angle of the seat.

In some embodiments, the sound is a timing sound of takeoff countdown.

In some embodiments, the on-board device comprises: the light emitting assembly, the air outlet assembly, the seat, and the multimedia assembly, and the target signal is used for indicating that the unmanned aerial vehicle is in the state of being taking off; and the controlling an operating status of an on-board device of the vehicle comprises at least one of the following steps: controlling the light emitting assembly to operate according to a second light emitting effect; controlling the air outlet assembly to operate in a second air outlet mode; adjusting the inclination angle of the seat, wherein an adjusted inclination angle is greater than the inclination angle before the adjustment; or controlling the multimedia assembly to make a sound simulating takeoff of the unmanned aerial vehicle.

In some embodiments, the on-board device comprises: the light emitting assembly, the air outlet assembly, and the multimedia assembly, and the target signal is used for indicating that the unmanned aerial vehicle is in the takeoff completed state; and the controlling an operating status of an on-board device of the vehicle comprises at least one of the following steps: controlling the light emitting assembly to operate according to a third light emitting effect; controlling the air outlet assembly to operate in a third air outlet mode, wherein the third air outlet mode is an air outlet mode of the air outlet assembly before the unmanned aerial vehicle is in the state of preparing for takeoff; or controlling the multimedia assembly to broadcast information used for indicating that the unmanned aerial vehicle has completed takeoff.

In some embodiments, the method further comprises: after receiving duration of the target signal reaches first duration, controlling the light emitting assembly to operate according to a fourth light emitting effect, wherein the fourth light emitting effect is a light emitting effect of the light emitting assembly before the unmanned aerial vehicle release instruction is obtained.

In some embodiments, the on-board device comprises the seat, and the inclination angle of the seat is adjusted when the unmanned aerial vehicle is in the takeoff state; and the controlling an operating status of an on-board device of the vehicle further comprises: restoring the inclination angle of the seat.

In some embodiments, the multimedia assembly makes a sound simulating takeoff of the unmanned aerial vehicle when the unmanned aerial vehicle is in the state of being taking off; and before the controlling the multimedia assembly to broadcast information used for indicating that the unmanned aerial vehicle has completed takeoff, the method further comprises: controlling the multimedia assembly to stop making the sound simulating takeoff of the unmanned aerial vehicle.

In some embodiments, the on-board device comprises: the air outlet assembly, and the target signal is used for indicating that the unmanned aerial vehicle is in the state of preparing for landing; and the controlling an operating status of an on-board device of the vehicle comprises: controlling the air outlet assembly to operate in a fourth air outlet mode.

In some embodiments, the on-board device comprises: the light emitting assembly, the air outlet assembly, and the multimedia assembly, and the target signal is used for indicating that the unmanned aerial vehicle is in the state of being landing; and the controlling an operating status of an on-board device of the vehicle comprises at least one of the following steps: controlling the light emitting assembly to operate according to a fifth light emitting effect; controlling the air outlet assembly to operate in a fifth air outlet mode; or controlling the multimedia assembly to make an alarm sound.

In some embodiments, the on-board device comprises: the light emitting assembly, the air outlet assembly, and the multimedia assembly; the target signal is used for indicating that the unmanned aerial vehicle is in the landing completed state; and the controlling an operating status of an on-board device of the vehicle comprises at least one of the following steps: controlling the light emitting assembly to operate according to a third light emitting effect; controlling the air outlet assembly to operate in a third air outlet mode, wherein the third air outlet mode is an air outlet mode of the air outlet assembly before the unmanned aerial vehicle is in the state of preparing for takeoff; or controlling the multimedia assembly to broadcast information used for indicating that the unmanned aerial vehicle has completed landing.

In some embodiments, the multimedia assembly makes an alarm sound when the unmanned aerial vehicle is in the state of being landing; before the controlling the multimedia assembly to broadcast information used for indicating that the unmanned aerial vehicle has completed landing, the method further comprises: controlling the multimedia assembly to stop making the alarm sound; and the controlling the multimedia assembly to broadcast information used for indicating that the unmanned aerial vehicle has completed landing comprises: after receiving duration of the target signal reaches second duration, controlling the multimedia assembly to broadcast the information used for indicating that the unmanned aerial vehicle has completed landing.

In some embodiments, the method further comprising: after receiving duration of the target signal reaches second duration, controlling the light emitting assembly to operate according to a fourth light emitting effect, wherein the fourth light emitting effect is a light emitting effect of the light emitting assembly before the unmanned aerial vehicle release instruction is obtained, and the fourth light emitting effect is different from the third light emitting effect.

In some embodiments, the on-board device comprises: the light emitting assembly and the multimedia assembly, and the target signal is the unmanned aerial vehicle release instruction; and the controlling an operating status of an on-board device of the vehicle comprises at least one of the following steps: controlling the light emitting assembly to operate according to a sixth light emitting effect; or controlling the multimedia assembly to broadcast information used for indicating that the unmanned aerial vehicle is being released and prompting to control the vehicle to be in a stationary state.

In some embodiments, after the target signal is received, the method further comprising: controlling the unmanned aerial vehicle to be powered on.

In some embodiments, after the controlling the unmanned aerial vehicle to be powered on, the method further comprising: after determining that the unmanned aerial vehicle establishes a communication connection with the vehicle, controlling the light emitting assembly to operate according to a seventh light emitting effect; and/or controlling the multimedia assembly to make a sound used for indicating that the connection succeeds.

In some embodiments, the on-board device comprises: the light emitting assembly, and the target signal is the release cancellation instruction; and the controlling an operating status of an on-board device of the vehicle comprises: controlling the light emitting assembly to operate according to a fourth light emitting effect, wherein the fourth light emitting effect is a light emitting effect of the light emitting assembly before the unmanned aerial vehicle release instruction is obtained.

In some embodiments, the on-board device comprises: the light emitting assembly and the multimedia assembly, and the target signal comprises: the return instruction and a state signal used for indicating that the unmanned aerial vehicle is in the flying state; and the controlling an operating status of an on-board device of the vehicle comprises at least one of the following steps: controlling the light emitting assembly to operate according to an eighth light emitting effect; or controlling the multimedia assembly to broadcast information used for indicating that the unmanned aerial vehicle prepares for returning.

In some embodiments, the on-board device comprises: the light emitting assembly, and the target signal comprises: the return cancellation instruction and a state signal used for indicating that the unmanned aerial vehicle is in the flying state; and the controlling an operating status of an on-board device of the vehicle comprises: controlling the light emitting assembly to operate according to a fourth light emitting effect, wherein the fourth light emitting effect is a light emitting effect of the light emitting assembly before the unmanned aerial vehicle release instruction is obtained.

In some embodiments, the on-board device comprises: the light emitting assembly and the air outlet assembly, and the target signal comprises: the landing cancellation instruction and a state signal used for indicating that the unmanned aerial vehicle is in the state of being landing; and the controlling an operating status of an on-board device of the vehicle comprises at least one of the following steps: controlling the light emitting assembly to operate according to a fourth light emitting effect; or controlling the air outlet assembly to operate in a third air outlet mode.

In some embodiments, the controlling an operating status of an on-board device of the vehicle after obtaining a target signal comprises: obtaining a state of the vehicle after obtaining the target signal, wherein the state of the vehicle comprises: one of a stationary state or a driving state; and controlling the operating status of the on-board device of the vehicle based on the state of the vehicle.

According to an aspect, there is provided a controller, comprising: a memory, a processor, and a computer program stored on the memory and executable on the processor, the processor, when executing the computer program, implementing the method according to any one of the above discussed embodiments.

According to an aspect, there is provided a vehicle, comprising: an on-board device and the controller according to any one of the above discussed embodiments.

In some embodiments, the on-board device comprises: at least one of a light emitting assembly, an air outlet assembly, a seat, or a multimedia assembly.

According to an aspect, there is provided a computer-readable storage medium, having a computer program stored therein, the computer program, when being executed by a processor, implementing the method according to any one of the above discussed embodiments.

According to an aspect, there is provided a control system, comprising: an unmanned aerial vehicle and the vehicle according to any one of the above discussed embodiments.

The method provided by the present invention may bring at least the following beneficial effects.

According to a vehicle, a control method for the vehicle, and a control system of the vehicle provided in the present invention, after obtaining a target signal, the vehicle can control an operating status of an on-board device. The target signal includes a state signal used for indicating a state of an unmanned aerial vehicle, and/or a control instruction for a target device, and the target device includes at least the unmanned aerial vehicle. Therefore, the operating status of the on-board device can reflect a state of the unmanned aerial vehicle, so that it can be ensured that a driver can intuitively learn the state of the unmanned aerial vehicle even in a cabin, so as to improve control reliability for the unmanned aerial vehicle.

Additional aspects and advantages of the present invention will be given in part in the following descriptions, become apparent in part from the following descriptions, or be learned from the practice of the present invention.

### BRIEF DESCRIPTION OF THE DRAWINGS

FIG. 1 is a schematic structural diagram of a control system according to an embodiment of the present invention.
FIG. 2 is a flowchart of a control method for a vehicle according to an embodiment of the present invention.
FIG. 3 is a flowchart of another control method for a vehicle according to an embodiment of the present invention.
FIG. 4 is a schematic structural diagram of a vehicle according to an embodiment of the present invention.
FIG. 5 is a schematic structural diagram of a vehicle host according to an embodiment of the present invention.

### DETAILED DESCRIPTION

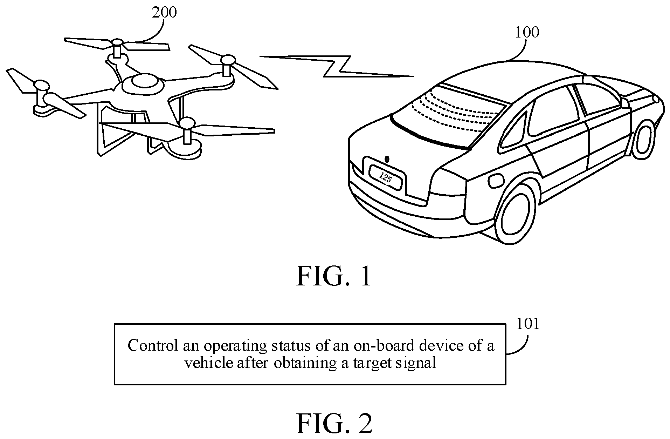

An embodiment of the present invention provides a control system. Referring to FIG. 1, the system includes: a vehicle 100 and an unmanned aerial vehicle 200. The vehicle 100 may establish a communication connection with the unmanned aerial vehicle 200 and may control the unmanned aerial vehicle 200 through the communication connection.

Optionally, the unmanned aerial vehicle 200 may be a vehicle-mounted unmanned aerial vehicle. In this case, an unmanned aerial vehicle hangar (hereinafter referred to as a hangar for short) configured to accommodate the unmanned aerial vehicle may be arranged on the vehicle 100 (for example, a vehicle roof). A parking apron may be mounted in the hangar. The unmanned aerial vehicle 200 may be parked on the parking apron.

An embodiment of the present invention provides a control method for a vehicle. The method may be applied to a vehicle, for example, a controller of the vehicle. Referring to FIG. 2, the method includes the following steps.

Step 101: An operating status of an on-board device of the vehicle is controlled after a target signal is obtained.

The target signal includes: a state signal used for indicating a state of an unmanned aerial vehicle, and/or a control instruction for a target device. The state of the unmanned aerial vehicle includes: one of a takeoff state, a flying state, or a landing state.

The target device includes at least the unmanned aerial vehicle. For example, the target device may include the unmanned aerial vehicle and the hangar. A control instruction for the unmanned aerial vehicle includes: one of a return instruction, a return cancellation instruction, or a landing cancellation instruction. A control instruction for the hangar includes: one of an unmanned aerial vehicle release instruction or a release cancellation instruction.

In this embodiment of in the present invention, the on-board device may include: at least one of a light emitting assembly, an air outlet assembly, a seat, or a multimedia assembly. For example, the on-board device may include: the light emitting assembly, the air outlet assembly, the seat, and the multimedia assembly. An operating status of the light emitting assembly includes a light emitting effect, an operating status of the air outlet assembly includes an air outlet mode, an operating status of the seat includes an inclination angle, and an operating status of the multimedia assembly includes played sound content.

A process in which the controller controls the operating status of the on-board device may include at least one of the following steps: controlling the light emitting assembly to operate according to a preset light emitting effect; controlling the air outlet assembly to operate in a preset air outlet mode; adjusting the inclination angle of the seat; or controlling the multimedia assembly to make a sound of preset content. Each of the preset light emitting effect, the preset air outlet mode, the inclination angle, and the preset content may be preconfigured before delivery of the vehicle, or may be customized by a driver.

Based on the foregoing, according to the control method for a vehicle provided in this embodiment of the present invention, after obtaining a target signal, the vehicle can control an operating status of an on-board device. The target signal includes a state signal used for indicating a state of an unmanned aerial vehicle, and/or a control instruction for a target device, and the target device includes at least the unmanned aerial vehicle. Therefore, the operating status of the on-board device can reflect a state of the unmanned aerial vehicle, so that it can be ensured that a driver can intuitively learn the state of the unmanned aerial vehicle even in a cabin, so as to improve control reliability for the unmanned aerial vehicle.

Optionally, the controller may be a vehicle host. the light emitting assembly may include: at least one of an atmosphere lamp, a reading lamp, or an interior dome lamp of the vehicle. For example, the light emitting assembly may be the atmosphere lamp of the vehicle. The air outlet assembly may include: at least one of a vehicle-mounted air conditioner or a vehicle-mounted fan of the vehicle. For example, the air outlet assembly may be the vehicle-mounted air conditioner of the vehicle. The multimedia assembly may include: at least one of a speaker (or referred to as a loudspeaker) or a vehicle-mounted television of the vehicle. For example, the multimedia assembly may be the speaker of the vehicle.

**In** some embodiments, the takeoff state of the unmanned aerial vehicle includes: at least one of a state of preparing for takeoff, a state of being taking off, or a takeoff completed state. The state of preparing for takeoff is determined by the vehicle based on a signal used for indicating that releasing of the unmanned aerial vehicle is completed and sent by the hangar.

The landing state of the unmanned aerial vehicle includes: at least one of a state of preparing for landing, a state of being landing, or a landing completed state. The state of preparing for landing is sent to the vehicle after the unmanned aerial vehicle returns to a target position.

**In** some embodiments, the on-board device includes: the light emitting assembly, the air outlet assembly, the seat, and the multimedia assembly. The target signal is used for indicating that the unmanned aerial vehicle is in the state of preparing for takeoff. In this case, a process in which the vehicle controls the operating status of the on-board device of the vehicle may include at least one of the following steps:
controlling the light emitting assembly to operate according to a first light emitting effect;
controlling the air outlet assembly to operate in a first air outlet mode;
adjusting the inclination angle of the seat, where an adjusted inclination angle is greater than the inclination angle before the adjustment; or
controlling the multimedia assembly to make a sound used for indicating that the unmanned aerial vehicle prepares for takeoff.

Optionally, a process in which the vehicle adjusts the inclination angle of the seat may include: if it is sensed that the seat has a person, adjusting the inclination angle of the seat.

Optionally, the sound used for indicating that the unmanned aerial vehicle prepares for takeoff may be a timing sound of takeoff countdown.

**In** some embodiments, the on-board device includes: the light emitting assembly, the air outlet assembly, the seat, and the multimedia assembly. The target signal is used for indicating that the unmanned aerial vehicle is in the state of being taking off. In this case, a process in which the vehicle controls the operating status of the on-board device of the vehicle may include at least one of the following steps:
controlling the light emitting assembly to operate according to a second light emitting effect;
controlling the air outlet assembly to operate in a second air outlet mode;
adjusting the inclination angle of the seat, where an adjusted inclination angle is greater than the inclination angle before the adjustment; or
controlling the multimedia assembly to make a sound simulating takeoff of the unmanned aerial vehicle.

In some embodiments, the on-board device includes: the light emitting assembly, the air outlet assembly, and the multimedia assembly. The target signal is used for indicating that the unmanned aerial vehicle is in the takeoff completed state. In this case, a process in which the vehicle controls the operating status of the on-board device of the vehicle may include at least one of the following steps:
controlling the light emitting assembly to operate according to a third light emitting effect;
controlling the air outlet assembly to operate in a third air outlet mode, where the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed takeoff.

Optionally, after receiving duration of the target signal reaches first duration, the vehicle may further control the light emitting assembly to operate according to a fourth light emitting effect. The fourth light emitting effect is a light emitting effect of the light emitting assembly before the unmanned aerial vehicle release instruction for the hangar is obtained.

Optionally, the on-board device includes the seat, and the inclination angle of the seat is adjusted when the unmanned aerial vehicle is in the takeoff state. When the target signal is used for indicating that the unmanned aerial vehicle is in the takeoff completed state, the process in which the vehicle controls the operating status of the on-board device of the vehicle may further include: restoring the inclination angle of the seat.

Optionally, the multimedia assembly makes a sound simulating takeoff of the unmanned aerial vehicle when the unmanned aerial vehicle is in the state of being taking off. Before controlling the multimedia assembly to broadcast the information used for indicating that the unmanned aerial vehicle has completed takeoff, the vehicle may further control the multimedia assembly to stop making the sound simulating takeoff of the unmanned aerial vehicle.

In some embodiments, the on-board device includes the air outlet assembly. The target signal is used for indicating that the unmanned aerial vehicle is in the state of preparing for landing. In this case, a process in which the vehicle controls the operating status of the on-board device of the vehicle may include:
controlling the air outlet assembly to operate in a fourth air outlet mode.

In some embodiments, the on-board device includes: the light emitting assembly, the air outlet assembly, and the multimedia assembly. The target signal is used for indicating that the unmanned aerial vehicle is in the state of being landing. In this case, a process in which the vehicle controls the operating status of the on-board device of the vehicle may include at least one of the following steps:
controlling the light emitting assembly to operate according to a fifth light emitting effect;
controlling the air outlet assembly to operate in a fifth air outlet mode; or
controlling the multimedia assembly to make an alarm sound.

In some embodiments, the on-board device includes: the light emitting assembly, the air outlet assembly, and the multimedia assembly. The target signal is used for indicating that the unmanned aerial vehicle is in the landing completed state. In this case, a process in which the vehicle controls the operating status of the on-board device of the vehicle may include at least one of the following steps:
controlling the light emitting assembly to operate according to a third light emitting effect;
controlling the air outlet assembly to operate in a third air outlet mode, where the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed landing.

In some embodiments, the multimedia assembly makes the alarm sound when the unmanned aerial vehicle is in the state of being landing. Before controlling the multimedia assembly to broadcast the information used for indicating that the unmanned aerial vehicle has completed landing, the vehicle may further control the multimedia assembly to stop making the alarm sound.

Optionally, a process in which the vehicle controls the multimedia assembly to broadcast the information used for indicating that the unmanned aerial vehicle has completed landing may include: after receiving duration of the target signal reaches second duration, controlling the multimedia assembly to broadcast the information used for indicating that the unmanned aerial vehicle has completed landing.

In some embodiments, when the target signal is a state signal used for indicating that the unmanned aerial vehicle is in the landing completed state, after receiving duration of the target signal reaches second duration, the vehicle may further control the light emitting assembly to operate according to a fourth light emitting effect. The fourth light emitting effect is a light emitting effect of the light emitting assembly before the unmanned aerial vehicle release instruction for the hangar is obtained. The fourth light emitting effect is different from the third light emitting effect.

In some embodiments, the on-board device includes: the light emitting assembly and the multimedia assembly, and the target signal is the unmanned aerial vehicle release instruction. In this case, a process in which the vehicle controls the operating status of the on-board device of the vehicle may include at least one of the following steps:
controlling the light emitting assembly to operate according to a sixth light emitting effect; or
controlling the multimedia assembly to broadcast information used for indicating that the unmanned aerial vehicle is being released and prompting to control the vehicle to be in a stationary state.

Optionally, after receiving the target signal, the vehicle may further control the unmanned aerial vehicle to be powered on.

Optionally, a process in which the vehicle controls the unmanned aerial vehicle to be powered on may include: supplying power to the unmanned aerial vehicle, to control the unmanned aerial vehicle to be powered on.

Optionally, a battery replacement assembly is arranged in the hangar, and a battery is placed in the hangar. A process in which the vehicle supplies power to the unmanned aerial vehicle may include: controlling the battery replacement assembly to insert the battery into the unmanned aerial vehicle, to supply power to the unmanned aerial vehicle.

In some embodiments, after controlling the unmanned aerial vehicle to be powered on and determining that the unmanned aerial vehicle establishes a communication connection with the vehicle, the vehicle may further control the light emitting assembly to operate according to a seventh light emitting effect; and/or control the multimedia assembly to make a sound used for indicating that the connection succeeds.

In some embodiments, the on-board device includes the light emitting assembly. The target signal is the release cancellation instruction. In this case, a process in which the vehicle controls the operating status of the on-board device may include: controlling the light emitting assembly to operate according to a fourth light emitting effect. The fourth light emitting effect is a light emitting effect of the light emitting assembly before the unmanned aerial vehicle release instruction is obtained.

In some embodiments, the on-board device includes: the light emitting assembly and the multimedia assembly. The target signal includes: the return instruction and a state signal used for indicating that the unmanned aerial vehicle is in the flying state. In this case, a process in which the vehicle controls the operating status of the on-board device of the vehicle may include at least one of the following steps:
controlling the light emitting assembly to operate according to an eighth light emitting effect; or
controlling the multimedia assembly to broadcast information used for indicating that the unmanned aerial vehicle prepares for returning.

In some embodiments, the target signal includes: the return cancellation instruction and a state signal used for indicating that the unmanned aerial vehicle is in the flying state. In this case, a process in which the vehicle controls the operating status of the on-board device of the vehicle may include:
controlling the light emitting assembly to operate according to a fourth light emitting effect. The fourth light emitting effect is a light emitting effect of the light emitting assembly before the unmanned aerial vehicle release instruction is obtained.

In some embodiments, the on-board device includes: the light emitting assembly and the air outlet assembly, and the target signal includes: the landing cancellation instruction and a state signal used for indicating that the unmanned aerial vehicle is in the state of being landing. In this case, a process in which the vehicle controls the operating status of the on-board device of the vehicle may include at least one of the following steps:
controlling the light emitting assembly to operate according to a fourth light emitting effect; or
controlling the air outlet assembly to operate in a third air outlet mode.

In some embodiments, the process in which after obtaining the target signal, the vehicle controls the operating status of the on-board device of the vehicle may include: obtaining a state of the vehicle after obtaining the target signal, where the state of the vehicle may include: one of a stationary state or a driving state; and controlling the operating status of the on-board device of the vehicle based on the state of the vehicle.

It may be understood that the operating status of the on-board device when the vehicle is in the stationary state may be completely different from, may be identical to, or may be partially the same as the operating status of the on-board device when the vehicle is in the driving state. For example, the operating status of the light emitting assembly, the operating status of the air outlet assembly, and the operating status of the multimedia assembly when the vehicle is in the stationary state may be the same as the operating status of the light emitting assembly, the operating status of the air outlet assembly, and the operating status of the multimedia assembly when the vehicle is in the driving state. The operating status of the seat when the vehicle is in the stationary state may be different from the operating status of the seat when the vehicle is in the driving state. For example, the adjustment angle of the seat when the vehicle is in the stationary state may be 13 degrees (°), and the adjustment angle of the seat when the vehicle is in the driving state may be 0°.

Optionally, in the entire process from releasing of the unmanned aerial vehicle to takeoff of the unmanned aerial vehicle and to landing of the unmanned aerial vehicle, the vehicle may control the operating status of the on-board device according to the target signal sequentially obtained in this process, so that the operating status of the on-board device is associated with the state of the unmanned aerial vehicle (and the control instruction for the target device). In this way, the driver can intuitively learn the state of the unmanned aerial vehicle through a state of the on-board device, so that a sense of anxiety generated in a process in which the driver waits for takeoff and landing of the vehicle-mounted unmanned aerial vehicle in a cabin can be greatly reduced, and experience of the driver is improved.

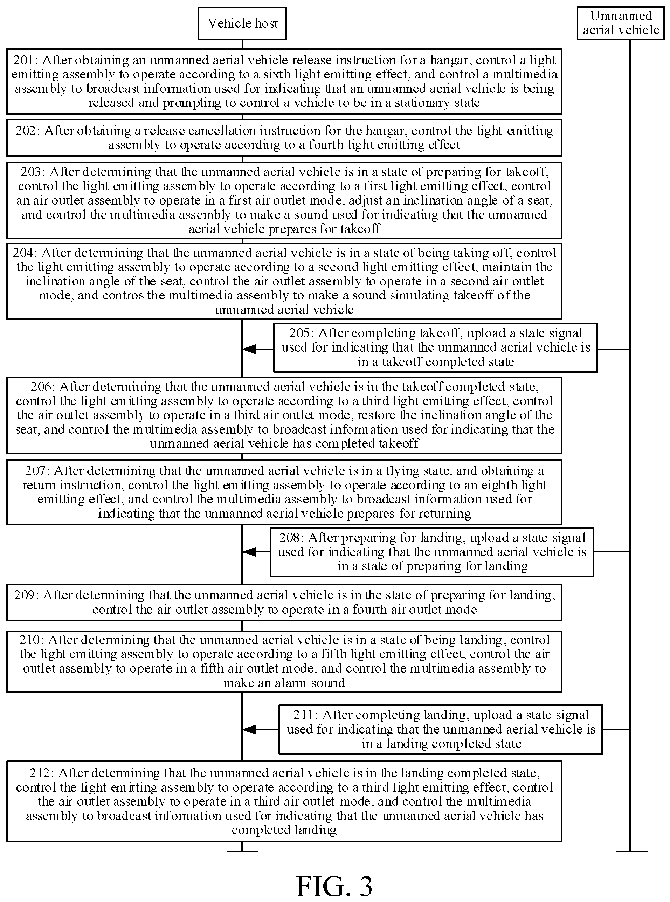

In this embodiment of the present invention, an example in which in the entire process from releasing of the unmanned aerial vehicle to takeoff of the unmanned aerial vehicle and to landing of the unmanned aerial vehicle, the vehicle host controls the operating status of the on-board device, and the on-board device includes the light emitting assembly, the air outlet assembly, the seat, and the multimedia assembly is used for describing the control method for a vehicle provided in this embodiment of the present invention. The method may be applied to a control system, for example, the control system shown in FIG. 1 Referring to FIG. 3, the method may include the following steps.

Step 201: After obtaining an unmanned aerial vehicle release instruction for a hangar, a vehicle host controls a light emitting assembly to operate according to a sixth light emitting effect, and controls a multimedia assembly to broadcast information used for indicating that an unmanned aerial vehicle is being released and prompting to control a vehicle to be in a stationary state.

In this embodiment of the present invention, a control application (APP) of the unmanned aerial vehicle may be installed in the vehicle. A start control may be displayed on an application interface of the control application. If a driver needs to control the unmanned aerial vehicle to be started, the driver may touch the start control. Correspondingly, the vehicle host may obtain the unmanned aerial vehicle release instruction that is for the hangar and that is triggered by the touch operation on the takeoff control. The unmanned aerial vehicle release instruction is a current target signal. Then, the vehicle host may control the light emitting assembly to operate according to the sixth light emitting effect, and control the multimedia assembly to broadcast the information used for indicating that the unmanned aerial vehicle is being released and prompting to control the vehicle to be in the stationary state.

Optionally, the sixth light emitting effect may be breathing slowly according to a preset color. The preset color may be orange. The information may be a text "The unmanned aerial vehicle is starting, please keep the vehicle stationary".

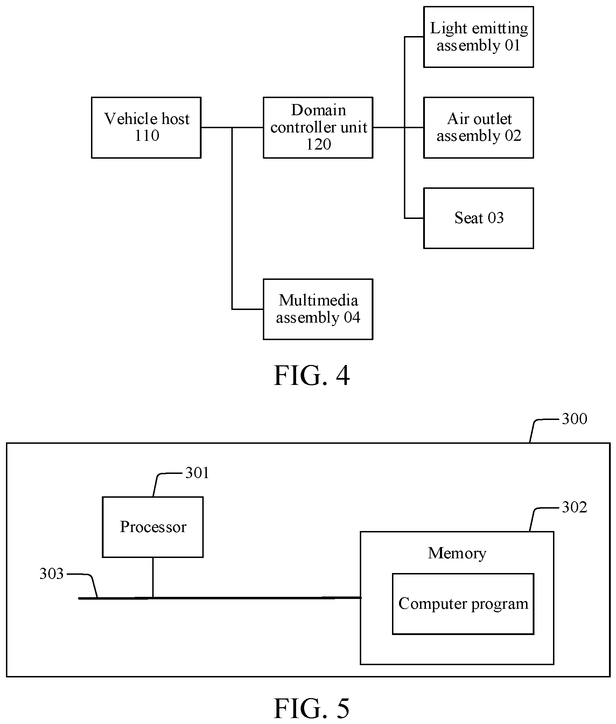

Referring to FIG. 4, in addition to including a vehicle host 110, the vehicle may further include: a domain controller unit (DCU) 120. The domain controller unit 120 may be separately connected to the vehicle host 110, a light emitting assembly 01, an air outlet assembly 02, and a seat 03 through a whole vehicle line. The vehicle host 110 may be further connected to a multimedia assembly 04 through the whole vehicle line.

For example, the vehicle may further include: an electronic control unit (ECU) of the light emitting assembly, an ECU of the air outlet assembly, and an ECU of the seat. For each of the light emitting assembly, the air outlet assembly, and the seat, the domain controller unit may be connected to the assembly through the ECU of the assembly.

After obtaining the unmanned aerial vehicle release instruction, the vehicle host may control the multimedia assembly to broadcast the information used for indicating that the unmanned aerial vehicle is being released and prompting to control the vehicle to be in the stationary state, and may control the ECU of the light emitting assembly through the domain controller unit to control the light emitting assembly to operate according to the sixth light emitting effect. For example, the vehicle host may control the multimedia assembly to play the information by invoking a voice broadcast software interface of the multimedia assembly.

The vehicle host may deliver an effect control packet for the light emitting assembly to the domain controller unit by invoking a software layer interface of the light emitting assembly, where the effect control packet includes the sixth light emitting effect. After receiving the effect control packet, the domain controller unit may control the light emitting assembly to operate according to the sixth light emitting effect by controlling the ECU of the light emitting assembly.

In this embodiment of the present invention, after obtaining the unmanned aerial vehicle release instruction for the hangar, the vehicle host may further send the unmanned aerial vehicle release instruction to the hangar. Then, the hangar may release locking of the unmanned aerial vehicle in response to the unmanned aerial vehicle release instruction, to release the unmanned aerial vehicle.

It may be understood that a lock control assembly may be mounted on a parking apron of the hangar, and the lock control assembly is configured to lock the unmanned aerial vehicle, so as to prevent collision from occurring on the unmanned aerial vehicle when the vehicle moves. In response to the unmanned aerial vehicle release instruction, the hangar may control the lock control assembly to release locking of the unmanned aerial vehicle.

Optionally, in response to the unmanned aerial vehicle release instruction, if the hangar determines that the unmanned aerial vehicle has established a communication connection with the vehicle host, the hangar may release locking of the unmanned aerial vehicle. After the unmanned aerial vehicle establishes the communication connection with the vehicle host, the vehicle host may send, to the hangar, a signal indicating that the connection has been successfully established. Correspondingly, the hangar may determine that the unmanned aerial vehicle establishes the communication connection with the vehicle host.

It may be understood that when the vehicle host obtains the unmanned aerial vehicle release instruction, the unmanned aerial vehicle may be in a power-off state. Therefore, after the hangar receives the unmanned aerial vehicle release instruction, the unmanned aerial vehicle has not established the communication connection with the vehicle host. In this case, in response to the unmanned aerial vehicle release instruction, the hangar may further control the unmanned aerial vehicle to be powered on. After being powered on, the unmanned aerial vehicle may establish the communication connection with the vehicle host. Then, the hangar may release locking of the unmanned aerial vehicle.

In this embodiment of the present invention, after determining that the vehicle host establishes the communication connection with the unmanned aerial vehicle, the vehicle host may control the light emitting assembly to operate according to a seventh light emitting effect, and/or control the multimedia assembly to make a sound used for indicating that the connection succeeds, so that the driver learns that the vehicle has established the communication connection with the unmanned aerial vehicle. For example, the vehicle may control the light emitting assembly to operate according to the seventh light emitting effect, and may control the multimedia assembly to make the sound used for indicating that the connection succeeds.

The seventh light emitting effect is different from the sixth light emitting effect. For example, a light emitting frequency, light emitting duration, and/or light emitting brightness of the light emitting assembly operating according to the seventh light emitting effect are/is different from a light emitting frequency, light emitting duration, and/or light emitting brightness of the light emitting assembly operating according to the sixth light emitting effect. Optionally, the seventh light emitting effect may be keeping on according to a preset color.

In this embodiment of the present invention, the vehicle host may control, by invoking a multimedia audio interface of the multimedia assembly, the multimedia assembly to make a sound effect used for indicating that the connection succeeds. For a process in which the vehicle host controls the light emitting assembly to operate according to the seventh light emitting effect, reference may be made to the related implementation process in which the controller controls the light emitting assembly to operate according to the sixth light emitting effect. Details are not described in this embodiment of the present invention again.

In this embodiment of the present invention, the vehicle may supply power to the unmanned aerial vehicle, so that the unmanned aerial vehicle is powered on. Optionally, the unmanned aerial vehicle is a vehicle-mounted unmanned aerial vehicle, a battery replacement assembly is arranged in the hangar of the unmanned aerial vehicle in the vehicle, and a battery is placed in the hanger. The vehicle may control the battery replacement assembly to insert the battery into the unmanned aerial vehicle, to supply power to the unmanned aerial vehicle. Alternatively, the vehicle has a power supply end, and the unmanned aerial vehicle has a charging end. The vehicle may control the charging end of the unmanned aerial vehicle to be connected to the power supply end, to supply power to the unmanned aerial vehicle.

Step 202: After obtaining a release cancellation instruction for the hangar, the vehicle host controls the light emitting assembly to operate according to a fourth light emitting effect.

In this embodiment of the present invention, a cancel control may be further displayed on the application interface of the control application installed in the vehicle. After the driver touches the start control displayed on the application interface, if no unmanned aerial vehicle needs to take off, the driver may touch the cancel control. The vehicle host may obtain the release cancellation instruction that is for the hangar and that is triggered by the touch operation on the cancel control. The release cancellation instruction is a current target signal.

Then, the vehicle host may control the light emitting assembly to operate according to the fourth light emitting effect. The fourth light emitting effect is a light emitting effect of the light emitting assembly before the vehicle host obtains the unmanned aerial vehicle release instruction for the hangar. It can be learned that after obtaining the release cancellation instruction, the vehicle host may control the light emitting assembly to restore the setting before the unmanned aerial vehicle is controlled.

The fourth light emitting effect is different from the sixth light emitting effect and the seventh light emitting effect. In addition, for a process in which the vehicle host controls the light emitting assembly to operate according to the fourth light emitting effect, reference may be made to the process in which the light emitting assembly is controlled to operate according to the sixth light emitting effect. Details are not described in this embodiment of the present invention again.

It may be understood that when obtaining the unmanned aerial vehicle release instruction for the hangar, the vehicle host may control the ECU of the light emitting assembly to record a current light emitting effect of the light emitting assembly, and use the light emitting effect as the fourth light emitting effect of the light emitting assembly before receiving the unmanned aerial vehicle release instruction.

Step 203: After determining that the unmanned aerial vehicle is in a state of preparing for takeoff, the vehicle host controls the light emitting assembly to operate according to a first light emitting effect, controls an air outlet assembly to operate in a first air outlet mode, adjusts an inclination angle of a seat, and controls the multimedia assembly to make a sound used for indicating that the unmanned aerial vehicle prepares for takeoff.

In this embodiment of the present invention, after receiving a signal used for indicating that releasing of the unmanned aerial vehicle is completed and sent by the hangar, the vehicle host may determine that the unmanned aerial vehicle is in the state of preparing for takeoff. In other words, a current target signal is used for indicating that the unmanned aerial vehicle is in the state of preparing for takeoff. Then, the vehicle host may control the light emitting assembly to operate according to the first light emitting effect, control the air outlet assembly to operate in the first air outlet mode, adjust the inclination angle of the seat, and control the multimedia assembly to make the sound used for indicating that the unmanned aerial vehicle prepares for takeoff.

The first light emitting effect may be different from each of the fourth light emitting effect, the sixth light emitting effect, and the seventh light emitting effect. For example, the first light emitting effect is keeping on after flashing for multiple times according to a preset color.

When the air outlet assembly operates in the first air outlet mode, the driver can feel wind when the unmanned aerial vehicle prepares for takeoff. For example, in the first air outlet mode, an air conditioner operates in a blow face and blow foot air outlet mode, both air outlets of the air conditioner at a position of a main driving seat and a position of a front passenger seat are in an open state, an air outlet direction of the air outlet is closest to a direction of a vehicle chassis (namely, lowermost), and an air speed gear of the air conditioner is a minimum gear. The air outlets of the air conditioner at the position of the main driving seat and the position of the front passenger seat include: an air outlet at an instrument panel.

The seat may include at least one of the main driving seat or the front passenger seat. For example, the seat may include the main driving seat and the front passenger seat. An adjusted inclination angle is greater than the inclination angle before the adjustment. The adjusted seat enables the driver to feel an uptilting angle when the unmanned aerial vehicle flies to the cloud. A difference between the adjusted inclination angle and the inclination angle before the adjustment may be 13°.

It may be understood that the signal indicating that releasing of the unmanned aerial vehicle is completed may be sent to the vehicle host after the hangar releases the unmanned aerial vehicle. In this case, after receiving the signal, the vehicle host may determine that the unmanned aerial vehicle has been in the state of preparing for takeoff, and then may directly control an operating status of an on-board device.

Alternatively, the signal indicating that releasing of the unmanned aerial vehicle is completed may be a release preparation signal that is sent to the vehicle host when the hangar prepares for releasing the unmanned aerial vehicle. In this case, after receiving the signal, the vehicle host can determine that the unmanned aerial vehicle is in the state of preparing for takeoff after preset duration, and then control an operating status of an on-board device. The preset duration may be duration that is consumed by the hangar to release locking of the unmanned aerial vehicle and that is pre-stored by the vehicle host.

Optionally, the sound used for indicating that the unmanned aerial vehicle prepares for takeoff may be a timing sound of takeoff countdown. In addition, the vehicle host may detect whether the seat has a person, and may adjust the inclination angle of the seat when sensing that the seat has a person. In this way, waste of control resources of the vehicle can be avoided.

In this embodiment of the present invention, for a process in which the vehicle controls the light emitting assembly to operate according to the first light emitting effect and a process in which the multimedia assembly makes the sound used for indicating that the unmanned aerial vehicle prepares for takeoff, reference may be made to the related implementation process in step 202. Details are not described in this embodiment of the present invention again.

A process in which the vehicle controls the air outlet assembly to operate in the first air outlet mode and a process in which the vehicle adjusts the inclination angle of the seat may include the following content.

The vehicle host may invoke a software layer interface of the air outlet assembly and a software layer interface of the seat, to deliver a mode execution packet of the air conditioner and an angle adjustment packet of the seat to the domain controller unit, where the mode execution packet includes the first air outlet mode, and the angle adjustment packet may include the difference between the adjusted inclination angle and the inclination angle before the adjustment of the seat. After receiving the mode execution packet and the angle adjustment packet, the domain controller unit may control, by controlling the ECU of the air outlet assembly, the air outlet assembly to operate in the first air outlet mode, and may adjust the inclination angle of the seat by controlling the ECU of the seat.

Step 204: After determining that the unmanned aerial vehicle is in a state of being taking off, the vehicle host controls the light emitting assembly to operate according to a second light emitting effect, maintains the inclination angle of the seat, controls the air outlet assembly to operate in a second air outlet mode, and controls the multimedia assembly to make a sound simulating takeoff of the unmanned aerial vehicle.

In this embodiment of the present invention, after determining that the unmanned aerial vehicle is in the state of preparing for takeoff, the vehicle host may send a takeoff instruction to the unmanned aerial vehicle through the communication connection with the unmanned aerial vehicle, so as to indicate the unmanned aerial vehicle to take off. Then, the vehicle host may determine that the unmanned aerial vehicle is in the state of being taking off, and then may control the light emitting assembly to operate according to the second light emitting effect, maintain the inclination angle of the seat, control the air outlet assembly to operate in the second air outlet mode, and control the multimedia assembly to make the sound simulating takeoff of the unmanned aerial vehicle. In other words, a current target signal is used for indicating that the unmanned aerial vehicle is in the state of being taking off.

The second light emitting effect may be the same as or different from the first light emitting effect. For example, the second light emitting effect may be different from the first light emitting effect. For example, the second light emitting effect may be keeping on. The second air outlet mode is different from the first air outlet mode. For example, an air volume and/or an air outlet direction when the air outlet assembly operates in the second air outlet mode are/is different from an air volume and/or an air outlet direction when the air outlet assembly operates in the first air outlet mode. For example, in the second air outlet mode, the air conditioner continues to operate in the blow face and blow foot air outlet mode, and the air speed gear of the air conditioner gradually decreases from a maximum gear to a first gear. The air outlet direction of each air outlet of the air conditioner is gradually adjusted from the lowermost to a direction closest to a vehicle roof (namely, uppermost). The first gear is located between the maximum gear and the minimum gear. For example, within the 1^{st} second (s) at which it is determined that the unmanned aerial vehicle is in the state of being taking off, the air speed gear is the maximum gear, lasting 4s, and the air outlet direction is gradually adjusted from the lowermost to the uppermost from the 1^{st} second. The air speed gear is switched to the first gear from the 5^{th} second. The air outlet direction of the air outlet of the air conditioner is closest to the uppermost from the 6^{th} second.

When the unmanned aerial vehicle takes off, the vehicle may control the air outlet assembly to operate in the second air outlet mode, may adjust the inclination angle of the seat, and may control the multimedia assembly to make the sound simulating takeoff of the unmanned aerial vehicle, so that the driver can immersively feel takeoff of the unmanned aerial vehicle.

It may be understood that for processes in which the vehicle controls the light emitting assembly, the air outlet assembly, and the multimedia assembly, reference may be made to the related implementation process in step 203. Details are not described in the present invention again.

Step 205: After completing takeoff, the unmanned aerial vehicle uploads, to the vehicle, a state signal used for indicating that the unmanned aerial vehicle is in a takeoff completed state.

The unmanned aerial vehicle may hover after taking off to a position at a first height from the vehicle roof, and may upload, to the vehicle through the communication connection with the vehicle, the state signal used for indicating that the unmanned aerial vehicle is in the takeoff completed state. The first height may be pre-stored by the unmanned aerial vehicle, for example, the first height is 8 meters (m).

Step 206: After determining that the unmanned aerial vehicle is in the takeoff completed state, the vehicle host controls the light emitting assembly to operate according to a third light emitting effect, controls the air outlet assembly to operate in a third air outlet mode, restores the inclination angle of the seat, and controls the multimedia assembly to broadcast information used for indicating that the unmanned aerial vehicle has completed takeoff.

After receiving the state signal used for indicating that the unmanned aerial vehicle is in the takeoff completed state, the vehicle host may determine that the unmanned aerial vehicle has completed takeoff. In this case, the state signal is a current target signal. Then, the vehicle host may control the light emitting assembly to operate according to the third light emitting effect, control the air outlet assembly to operate in the third air outlet mode, restore the inclination angle of the seat, and control the multimedia assembly to broadcast the information used for indicating that the unmanned aerial vehicle has completed takeoff.

The third light emitting effect is different from each of the foregoing light emitting effects. For example, the third light emitting effect is: extinguishing after breathing for multiple times. For example, the third light emitting effect may be breathing once per second and extinguishing after breathing for three times. The third air outlet mode is different from each of the foregoing air outlet modes, and the third air outlet mode is an operating mode before the unmanned aerial vehicle is in the state of preparing for takeoff. The information may be a text "The unmanned aerial vehicle has completed takeoff".

It can be learned that after determining that the unmanned aerial vehicle completes takeoff, the vehicle may control the air outlet assembly and the seat to restore the settings before the unmanned aerial vehicle is controlled.

In this embodiment of the present invention, after receiving the signal that is sent by the hangar and that is used for indicating that releasing of the unmanned aerial vehicle is completed, the vehicle host may control the ECU of the air outlet assembly to record a current air outlet mode of the air outlet assembly, and use the air outlet mode as the third air outlet mode of the air outlet assembly before receiving the signal.

Optionally, after receiving the signal, the vehicle host may further control the ECU of the seat to record a current inclination angle of the seat, and use the inclination angle as the inclination angle of the seat before receiving the signal.

It may be understood that before controlling the multimedia assembly to broadcast the information used for indicating that the unmanned aerial vehicle has completed takeoff, the vehicle may further control the multimedia assembly to stop making the sound simulating takeoff of the unmanned aerial vehicle.

Optionally, after receiving duration of the state signal used for indicating that the unmanned aerial vehicle is in the takeoff completed state reaches first duration, the vehicle may control the air outlet assembly to operate in the third air outlet mode, restore the inclination angle of the seat, and control the multimedia assembly to stop making the sound simulating takeoff of the unmanned aerial vehicle. In addition, the vehicle may further control the light emitting assembly to operate according to a fourth light emitting effect. The first duration may be pre-stored by the unmanned aerial vehicle. For example, the first duration may be 10s.

In this embodiment of the present invention, for processes in which the vehicle controls the light emitting assembly, the air outlet assembly, the seat, and the multimedia assembly in step 206, reference may be made to the related implementation process in step 203. Details are not described in this embodiment of the present invention again.

It may be understood that after receiving the state signal that is sent by the unmanned aerial vehicle and that is used for indicating that the unmanned aerial vehicle is in the takeoff completed state, the vehicle host may determine that the unmanned aerial vehicle completes takeoff, and then enters a flying state.

Step 207: After determining that the unmanned aerial vehicle is in a flying state, and obtaining a return instruction, the vehicle host controls the light emitting assembly to operate according to an eighth light emitting effect, and controls the multimedia assembly to broadcast information used for indicating that the unmanned aerial vehicle prepares for returning.

In this embodiment of the present invention, a return control may be displayed on the application interface of the control application installed in the vehicle. If the driver needs to control the unmanned aerial vehicle to return, the driver may touch the return control. Correspondingly, the vehicle host may obtain the return instruction that is triggered by the touch operation on the return control. In this case, the return instruction and a state signal used for indicating that the unmanned aerial vehicle is in the flying state are a current target signal. The state signal is used for indicating that the unmanned aerial vehicle is in the flying state before the return instruction is received. Then, the vehicle host may control the light emitting assembly to operate according to the eighth light emitting effect, and control the multimedia assembly to broadcast a sound used for indicating that the unmanned aerial vehicle prepares for returning, so as to remind the driver that the unmanned aerial vehicle prepares for returning.

The eighth light emitting effect may be the same as or different from the sixth light emitting effect. For example, the eighth light emitting effect is the same as the sixth light emitting effect. The information may be a text "The unmanned aerial vehicle starts returning".

In this embodiment of the present invention, after obtaining the return instruction for the unmanned aerial vehicle, the vehicle host may further send the return instruction to the unmanned aerial vehicle. Then, the unmanned aerial vehicle may perform a return operation in response to the return instruction.

Optionally, after touching the return control displayed on the application interface, the driver may further touch the cancel control on the application interface if no unmanned aerial vehicle needs to return. Correspondingly, the vehicle host may obtain a return cancellation instruction for the unmanned aerial vehicle. The return cancellation instruction and a state signal used for indicating that the unmanned aerial vehicle is in the flying state are a current target signal. The state signal is used for indicating that the unmanned aerial vehicle is in the flying state after the return instruction is received. Then, the vehicle host may control the light emitting assembly to stop operating according to the eighth light emitting effect, but operate according to the fourth light emitting effect. It can be learned that in a process in which the unmanned aerial vehicle returns and flies, if the vehicle obtains the return cancellation instruction, the vehicle may control the light emitting assembly to restore the setting before the unmanned aerial vehicle is controlled.

In this embodiment of the present invention, for a process in which the vehicle controls the light emitting assembly to operate according to the fourth light emitting effect, reference may be made to the related implementation process in step 201. Details are not described in this embodiment of the present invention again.

After obtaining the return cancellation instruction, the vehicle host may further send the return cancellation instruction to the unmanned aerial vehicle through the communication connection with the unmanned aerial vehicle. Then, the unmanned aerial vehicle may stop returning in response to the return cancellation instruction.

Step 208: After preparing for landing, the unmanned aerial vehicle uploads, to the vehicle, a state signal used for indicating that the unmanned aerial vehicle is in a state of preparing for landing.

In response to the return instruction, after flying to a target position and hovering, the unmanned aircraft may upload, to the vehicle through the communication connection with the vehicle, the state signal used for indicating that the unmanned aerial vehicle is in the state of preparing for landing. The target position is a position at a second height above the vehicle. The second height is a flight height when the unmanned aerial vehicle is in the flying state.

Step 209: After determining that the unmanned aerial vehicle is in the state of preparing for landing, the vehicle host controls the air outlet assembly to operate in a fourth air outlet mode.

After receiving the state signal that is sent by the unmanned aerial vehicle and that is used for indicating that the unmanned aerial vehicle is in the state of preparing for landing, the vehicle host may determine that the unmanned aerial vehicle is in the state of preparing for landing. The state signal is a current target signal. Then, the vehicle host may control the air outlet assembly to operate in the fourth air outlet mode.

The fourth air outlet mode is different from each of the foregoing air outlet modes. For example, in the fourth air outlet mode, the air speed gear of the air conditioner is the minimum gear, and the air outlet direction of the air conditioner is the uppermost.

For a process in which the vehicle host controls the air outlet assembly to operate in the fourth air outlet mode, reference may be made to the related implementation process in step 203. Details are not described in this embodiment of the present invention again.

Step 210: After determining that the unmanned aerial vehicle is in a state of being landing, the vehicle host controls the light emitting assembly to operate according to a fifth light emitting effect, controls the air outlet assembly to operate in a fifth air outlet mode, and controls the multimedia assembly to make an alarm sound.

After determining that receiving duration of the state signal used for indicating that the unmanned aerial vehicle is in the state of preparing for landing reaches third duration, the vehicle host may determine that the unmanned aerial vehicle is in the state of being landing. Correspondingly, a current target signal is used for indicating that the unmanned aerial vehicle is in the state of being landing. Then, the vehicle host may control the light emitting assembly to operate according to the fifth light emitting effect, control the air outlet assembly to operate in the fifth air outlet mode, and control the multimedia assembly to make the alarm sound. The third duration may be pre-stored by the vehicle host, for example, may be 3s.

The fifth light emitting effect is different from each of the foregoing light emitting effects. The alarm sound may be used for prompting a pedestrian near the vehicle that the unmanned aerial vehicle is landing. The fifth air outlet mode is different from each of the foregoing air outlet modes. For example, in the fifth air outlet mode, the air conditioner operates in the blow face and blow foot air outlet mode, and the air speed gear of the air conditioner increases first and then decreases. The air outlet direction of each air outlet of the air conditioner is gradually adjusted from the uppermost to the lowermost. For example, in the 1^{st} second, the air speed gear is the first gear, the air outlet direction is the uppermost, lasting 9s, and the air outlet direction gradually changes toward the lowermost from the 1^{st} second. In the 10^{th} second, the air speed gear is the maximum gear, lasting 10s. In the 20^{th} second, the air speed gear is the second gear, lasting 20s. In the 40^{th} second, the air speed gear is the first gear, and the air outlet direction is the lowermost. The second gear is between the maximum gear and the minimum gear and is larger than the first gear. For example, if there are a total of seven air speed gears, the first gear may be a gear 3, and the second gear may be a gear 5.

In this embodiment of the present invention, for processes in which the vehicle controls the light emitting assembly to operate according to the fifth light emitting effect, controls the air outlet assembly to operate in the fifth air outlet mode, and controls the multimedia assembly to make the alarm sound, reference may be made to the related implementation process in step 203. Details are not described in this embodiment of the present invention again.

It may be understood that, in a landing process, if the unmanned aerial vehicle lands to the second height, the unmanned aerial vehicle may perform an operation of recognizing a parking apron. After recognizing the parking apron, the unmanned aerial vehicle may continue to land until the unmanned aerial vehicle lands to the parking apron.

In this embodiment of the present invention, in a process in which the unmanned aerial vehicle lands, if no unmanned aerial vehicle needs to be land, the driver may touch the cancel control displayed on the application interface of the control application. Correspondingly, the vehicle host may obtain a landing cancellation instruction triggered by the touch operation on the cancel control. The landing cancellation instruction and a state signal used for indicating that the unmanned aerial vehicle is in the state of being landing are a current target signal.

Then, the vehicle host may control the light emitting assembly to operate according to the fourth light emitting effect, and control the air outlet assembly to operate in the third air outlet mode.

Step 211: After completing landing, the unmanned aerial vehicle uploads, to the vehicle, a state signal used for indicating that the unmanned aerial vehicle is in a landing completed state.

After landing on the parking apron, the unmanned aerial vehicle may determine that landing is completed, and then may upload, to the vehicle through the communication connection with the vehicle, the state signal used for indicating that the unmanned aerial vehicle is in the landing completed state.

Step 212: After determining that the unmanned aerial vehicle is in the landing completed state, the vehicle host controls the light emitting assembly to operate according to a third light emitting effect, controls the air outlet assembly to operate in a third air outlet mode, and controls the multimedia assembly to broadcast information used for indicating that the unmanned aerial vehicle has completed landing.

After receiving the state signal that is sent by the unmanned aerial vehicle and that is used for indicating that the unmanned aerial vehicle is in the landing completed state, the vehicle host may determine that the unmanned aerial vehicle is in the landing completed state. The state signal is a current target signal. Then, the vehicle host may control the light emitting assembly to operate according to the third light emitting effect, control the air outlet assembly to operate in the third air outlet mode, and control the multimedia assembly to broadcast the information used for indicating that the unmanned aerial vehicle has completed landing.

In this embodiment of the present invention, before controlling the multimedia assembly to broadcast the information used for indicating that the unmanned aerial vehicle has completed landing, the vehicle host may further control the multimedia assembly to stop making the alarm sound.

Optionally, after receiving duration of the target signal reaches second duration, the vehicle host may control the multimedia assembly to broadcast the information used for indicating that the unmanned aerial vehicle has completed landing. Optionally, after receiving duration of the target signal reaches second duration, the vehicle may further control the light emitting assembly to operate according to a fourth light emitting effect.

It may be understood that, after receiving the state signal, the vehicle host may further control the hangar to lock the unmanned aerial vehicle, and control the parking apron to move in a direction close to the vehicle chassis, so as to recover the unmanned aerial vehicle.

It may be learned from the descriptions of step 201 to step 212 that, according to the method provided in this embodiment of the present invention, in the entire process from takeoff to landing of the unmanned aerial vehicle, the light emitting assembly, the air outlet assembly, the seat, and the multimedia assembly of the vehicle may be jointly controlled according to a node in which the unmanned aerial vehicle is located, and from multiple aspects such as a vision (implemented by using the light emitting assembly), a tactile perception (implemented by using the air outlet assembly and the seat), and an auditory perception (implemented by using the multimedia assembly), the driver understands the feeling of taking off and landing with the unmanned aerial vehicle in the cabin of the unmanned aerial vehicle, so as to immersively feel the state of the unmanned aerial vehicle. In this way, sense experience of the driver is improved, functions of the vehicle are effectively enriched, and a sense of science and technology of the vehicle is improved.

It may be understood that a sequential order of the steps of the control method for a vehicle provided in this embodiment of the present invention may be adjusted to some extent, or a step may be correspondingly added or omitted according to a situation. For example, step 201 and step 202 may be deleted according to a situation, for example, before the vehicle host controls the unmanned aerial vehicle, the unmanned aerial vehicle has been released. Alternatively, step 203, step 204, step 205, step 206, step 207, step 208, step 209, step 210, step 211, and step 212 may be deleted according to a situation. In addition, in each step performed by the vehicle, the vehicle may control operating statuses of some of the light emitting assembly, the air outlet assembly, the seat, and the multimedia assembly.

Based on the foregoing, according to the control method for a vehicle provided in this embodiment of the present invention, after obtaining a target signal, the vehicle can control an operating status of an on-board device. The target signal includes a state signal used for indicating a state of an unmanned aerial vehicle, and/or a control instruction for a target device, and the target device includes at least the unmanned aerial vehicle. Therefore, the operating status of the on-board device can reflect a state of the unmanned aerial vehicle, so that it can be ensured that a driver can intuitively learn the state of the unmanned aerial vehicle even in a cabin, so as to improve control reliability for the unmanned aerial vehicle.

An embodiment of the present invention provides a vehicle. The vehicle includes: a controller and an on-board device. The controller is configured to:
control an operating status of an on-board device of the vehicle after obtaining a target signal.

The target signal includes a state signal used for indicating a state of an unmanned aerial vehicle, and/or a control instruction for a target device, and the target device includes at least the unmanned aerial vehicle.

Optionally, the on-board device includes: at least one of a light emitting assembly, an air outlet assembly, a seat, or a multimedia assembly.

Optionally, an operating status of the light emitting assembly includes a light emitting effect, an operating status of the air outlet assembly includes an air outlet mode, an operating status of the seat includes an inclination angle, and an operating status of the multimedia assembly includes played sound content. A process in which the controller controls the operating status of the on-board device of the vehicle may include at least one of the following steps:
controlling the light emitting assembly to operate according to a preset light emitting effect;
controlling the air outlet assembly to operate in a preset air outlet mode;
adjusting the inclination angle of the seat; or
controlling the multimedia assembly to make a sound of preset content.

Optionally, the target device further includes: a hangar arranged on a vehicle roof and configured to accommodate the unmanned aerial vehicle.

A control instruction for the hangar includes: one of an unmanned aerial vehicle release instruction or a release cancellation instruction.

Optionally, a control instruction for the unmanned aerial vehicle includes: one of a return instruction, a return cancellation instruction, or a landing cancellation instruction.

The state of the unmanned aerial vehicle includes: one of a takeoff state, a flying state, or a landing state.

Optionally, the target device further includes: a hangar arranged on a vehicle roof and configured to accommodate the unmanned aerial vehicle.

The takeoff state includes: at least one of a state of preparing for takeoff, a state of being taking off, or a takeoff completed state. The state of preparing for takeoff is determined by the vehicle based on a signal used for indicating that releasing of the unmanned aerial vehicle is completed and sent by the hangar.

The landing state includes: at least one of a state of preparing for landing, a state of being landing, or a landing completed state. The state of preparing for landing is sent to the vehicle after the unmanned aerial vehicle returns to a target position.

Optionally, the on-board device includes: the light emitting assembly, the air outlet assembly, the seat, and the multimedia assembly, and the target signal is used for indicating that the unmanned aerial vehicle is in the state of preparing for takeoff. A process in which the controller controls the operating status of the on-board device of the vehicle may include at least one of the following steps:
controlling the light emitting assembly to operate according to a first light emitting effect;
controlling the air outlet assembly to operate in a first air outlet mode;
adjusting the inclination angle of the seat, where an adjusted inclination angle is greater than the inclination angle before the adjustment; or
controlling the multimedia assembly to make a sound used for indicating that the unmanned aerial vehicle prepares for takeoff.

Optionally, the controller may be configured to: if it is sensed that the seat has a person, adjust the inclination angle of the seat.

Optionally, the sound is a timing sound of takeoff countdown.

Optionally, the on-board device includes: the light emitting assembly, the air outlet assembly, the seat, and the multimedia assembly, and the target signal is used for indicating that the unmanned aerial vehicle is in the state of being taking off. A process in which the controller controls the operating status of the on-board device of the vehicle may include at least one of the following steps:
controlling the light emitting assembly to operate according to a second light emitting effect;
controlling the air outlet assembly to operate in a second air outlet mode;
adjusting the inclination angle of the seat, where an adjusted inclination angle is greater than the inclination angle before the adjustment; or
controlling the multimedia assembly to make a sound simulating takeoff of the unmanned aerial vehicle.

Optionally, the on-board device includes: the light emitting assembly, the air outlet assembly, and the multimedia assembly, and the target signal is used for indicating that the unmanned aerial vehicle is in the takeoff completed state. A process in which the controller controls the operating status of the on-board device of the vehicle may include at least one of the following steps:
controlling the light emitting assembly to operate according to a third light emitting effect;
controlling the air outlet assembly to operate in a third air outlet mode, where the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed takeoff.

Optionally, the controller may be further configured to:
after receiving duration of the target signal reaches first duration, control the light emitting assembly to operate according to a fourth light emitting effect. The fourth light emitting effect is a light emitting effect of the light emitting assembly before the unmanned aerial vehicle release instruction is obtained.

Optionally, the on-board device includes the seat, and the inclination angle of the seat is adjusted when the unmanned aerial vehicle is in the takeoff state. A process in which the controller controls the operating status of the on-board device of the vehicle may include:
restoring the inclination angle of the seat.

Optionally, the multimedia assembly makes a sound simulating takeoff of the unmanned aerial vehicle when the unmanned aerial vehicle is in the state of being taking off. Before controlling the multimedia assembly to broadcast information used for indicating that the unmanned aerial vehicle has completed takeoff, the controller may further control the multimedia assembly to stop making the sound simulating takeoff of the unmanned aerial vehicle.

Optionally, the on-board device includes: the air outlet assembly, and the target signal is used for indicating that the unmanned aerial vehicle is in the state of preparing for landing. A process in which the controller controls the operating status of the on-board device of the vehicle may include:
controlling the air outlet assembly to operate in a fourth air outlet mode.

Optionally, the on-board device includes: the light emitting assembly, the air outlet assembly, and the multimedia assembly, and the target signal is used for indicating that the unmanned aerial vehicle is in the state of being landing. A process in which the controller controls the operating status of the on-board device of the vehicle may include at least one of the following steps:
controlling the light emitting assembly to operate according to a fifth light emitting effect;
controlling the air outlet assembly to operate in a fifth air outlet mode; or
controlling the multimedia assembly to make an alarm sound.

Optionally, the on-board device includes: the light emitting assembly, the air outlet assembly, and the multimedia assembly. The target signal is used for indicating that the unmanned aerial vehicle is in the landing completed state. A process in which the controller controls the operating status of the on-board device of the vehicle may include at least one of the following steps:
controlling the light emitting assembly to operate according to a third light emitting effect;
controlling the air outlet assembly to operate in a third air outlet mode, where the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed landing.

Optionally, the multimedia assembly makes an alarm sound when the unmanned aerial vehicle is in the state of being landing. Before controlling the multimedia assembly to broadcast information used for indicating that the unmanned aerial vehicle has completed landing, the controller may control the multimedia assembly to stop making the alarm sound.

The controller may be configured to: after receiving duration of the target signal reaches second duration, control the multimedia assembly to broadcast the information used for indicating that the unmanned aerial vehicle has completed landing.

Optionally, the controller may be further configured to: after receiving duration of the target signal reaches second duration, control the light emitting assembly to operate according to a fourth light emitting effect. The fourth light emitting effect is a light emitting effect of the light emitting assembly before the unmanned aerial vehicle release instruction is obtained, and the fourth light emitting effect is different from the third light emitting effect.

Optionally, the on-board device includes: the light emitting assembly and the multimedia assembly, and the target signal is the unmanned aerial vehicle release instruction. A process in which the controller controls the operating status of the on-board device of the vehicle may include at least one of the following steps:
controlling the light emitting assembly to operate according to a sixth light emitting effect; or
controlling the multimedia assembly to broadcast information used for indicating that the unmanned aerial vehicle is being released and prompting to control the vehicle to be in a stationary state.

Optionally, after receiving the target signal, the controller may further control the unmanned aerial vehicle to be powered on.

Optionally, after controlling the unmanned aerial vehicle to be powered on and determining that the unmanned aerial vehicle establishes a communication connection with the vehicle, the controller may further control the light emitting assembly to operate according to a seventh light emitting effect; and/or control the multimedia assembly to make a sound used for indicating that the connection succeeds.

Optionally, the on-board device includes: the light emitting assembly, and the target signal is the release cancellation instruction. A process in which the controller controls the operating status of the on-board device of the vehicle may include:
controlling the light emitting assembly to operate according to a fourth light emitting effect. The fourth light emitting effect is a light emitting effect of the light emitting assembly before the unmanned aerial vehicle release instruction is obtained.

Optionally, the on-board device includes: the light emitting assembly and the multimedia assembly, and the target signal includes: the return instruction and a state signal used for indicating that the unmanned aerial vehicle is in the flying state. A process in which the controller controls the operating status of the on-board device of the vehicle may include at least one of the following steps:
controlling the light emitting assembly to operate according to an eighth light emitting effect; or
controlling the multimedia assembly to broadcast information used for indicating that the unmanned aerial vehicle prepares for returning.

Optionally, the on-board device includes: the light emitting assembly, and the target signal includes: the return cancellation instruction and a state signal used for indicating that the unmanned aerial vehicle is in the flying state. A process in which the controller controls the operating status of the on-board device of the vehicle may include: controlling the light emitting assembly to operate according to a fourth light emitting effect. The fourth light emitting effect is a light emitting effect of the light emitting assembly before the unmanned aerial vehicle release instruction is obtained.

Optionally, the on-board device includes: the light emitting assembly and the air outlet assembly, and the target signal includes: the landing cancellation instruction and a state signal used for indicating that the unmanned aerial vehicle is in the state of being landing. A process in which the controller controls the operating status of the on-board device of the vehicle may include at least one of the following steps:
controlling the light emitting assembly to operate according to a fourth light emitting effect; or
controlling the air outlet assembly to operate in a third air outlet mode.

Optionally, the controller may be configured to: obtain a state of the vehicle after obtaining the target signal, where the state of the vehicle includes: one of a stationary state or a driving state; and control the operating status of the on-board device of the vehicle based on the state of the vehicle.

Based on the foregoing, according to the vehicle provided in this embodiment of the present invention, after obtaining a target signal, the vehicle can control an operating status of an on-board device. The target signal includes a state signal used for indicating a state of an unmanned aerial vehicle, and/or a control instruction for a target device, and the target device includes at least the unmanned aerial vehicle. Therefore, the operating status of the on-board device can reflect a state of the unmanned aerial vehicle, so that it can be ensured that a driver can intuitively learn the state of the unmanned aerial vehicle even in a cabin, so as to improve control reliability for the unmanned aerial vehicle.

FIG. 5 is a schematic structural diagram of a controller according to an embodiment of the present invention. The controller may be the foregoing vehicle host. As shown in FIG. 5, the controller 300 includes: a processor 301 and a memory 302. The processor 301 and the memory 302 are connected, for example, are connected by a bus 303.

The processor 301 may be a central processing unit (CPU), a general purpose processor, a digital signal processor (DSP), an application specific integrated circuit (ASIC), a field programmable gate array (FPGA), or another programmable logic device, a transistor logic device, a hardware component, or any combination thereof. The processor may implement or execute various example logical blocks, modules, and circuits described with reference to content disclosed in the present invention. The processor 301 may also be a combination that implements a computation function, for example, including one microprocessor or a combination of multiple microprocessors, or a combination of a DSP and a microprocessor.

The bus 303 may include a channel, to transmit information between the foregoing components. The bus 303 may be a peripheral component interconnect (PCI) bus, an extended industry standard architecture (EISA) bus, or the like. The bus 303 may be classified into an address bus, a data bus, a control bus, and the like. For ease of representation, only one bold line is used to represent the bus in FIG. 5, but this does not mean that there is only one bus or only one type of bus.

The memory 302 is configured to store a computer program corresponding to the control method for a vehicle in the foregoing embodiments of the present invention. The computer program is controlled by the processor 301 to execute. The processor 301 is configured to execute the computer program stored in the memory 302 to implement the content in the foregoing method embodiments.

An embodiment of the present invention provides a computer-readable storage medium, having a computer program therein. The computer program, when being executed by a processor, implements the method applied to the vehicle and provided in the foregoing method embodiments.

It should be noted that the logic and/or steps shown in the flowcharts or described in any other manner herein, for example, a sequenced list that may be considered as executable instructions used for implementing logical functions, may be specifically implemented in any computer readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that each part of the present invention can be implemented by hardware, software, firmware or a combination thereof. In the foregoing implementations, multiple steps or methods may be implemented by using software or firmware that are stored in a memory and are executed by a proper instruction execution system. For example, if being implemented by hardware, like another implementation, the plurality of steps or methods may be implemented by any one of following common technologies in the art or a combination thereof: a discrete logic circuit of a logic gate circuit for realizing a logic function for a data signal, an application specific integrated circuit having a suitable combined logic gate circuit, a programmable gate array (PGA), and a field programmable gate array (FPGA).

## Claims

1. A control method for a vehicle (100), the method comprising:
controlling an operating status of an on-board device of the vehicle after obtaining a target signal,
the target signal comprising: a state signal used for indicating a state of an unmanned aerial vehicle (200), and/or a control instruction for a target device, and the target device comprising at least the unmanned aerial vehicle;
wherein the on-board device comprises: at least one of: a light emitting assembly comprising at least one of an atmosphere lamp, a reading lamp, or an interior dome lamp of the vehicle; an air outlet assembly; a seat; or a multimedia assembly;
wherein an operating status of the light emitting assembly comprises a light emitting effect, an operating status of the air outlet assembly comprises an air outlet mode, an operating status of the seat comprises an inclination angle, and an operating status of the multimedia assembly comprises played sound content; and
the controlling an operating status of an on-board device of the vehicle comprises at least one of the following steps:
controlling the light emitting assembly to operate according to a preset light emitting effect;
controlling the air outlet assembly to operate in a preset air outlet mode;
adjusting the inclination angle of the seat; or
controlling the multimedia assembly to make a sound of preset content.

2. The method according to claim 1, wherein the target device further comprises: a hangar arranged on a vehicle roof and configured to accommodate the unmanned aerial vehicle; and
a control instruction for the hangar comprises: one of an unmanned aerial vehicle release instruction or a release cancellation instruction.

3. The method according to claim 1, wherein
a control instruction for the unmanned aerial vehicle comprises: one of a return instruction, a return cancellation instruction, or a landing cancellation instruction; and
the state of the unmanned aerial vehicle comprises: one of a takeoff state, a flying state, or a landing state.

4. The method according to claim 3, wherein the target device further comprises: a hangar arranged on a vehicle roof and configured to accommodate the unmanned aerial vehicle;
the takeoff state comprises: at least one of a state of preparing for takeoff, a state of being taking off, or a takeoff completed state, wherein the state of preparing for takeoff is determined by the vehicle based on a signal used for indicating that releasing of the unmanned aerial vehicle is completed and sent by the hangar; and
the landing state comprises: at least one of a state of preparing for landing, a state of being landing, or a landing completed state, wherein the state of preparing for landing is sent to the vehicle after the unmanned aerial vehicle returns to a target position.

5. The method according to claim **4,** wherein the on-board device comprises: the light emitting assembly, the air outlet assembly, the seat, and the multimedia assembly, and the target signal is used for indicating that the unmanned aerial vehicle is in the state of preparing for takeoff; and the controlling an operating status of an on-board device of the vehicle comprises at least one of the following steps:
controlling the light emitting assembly to operate according to a first light emitting effect;
controlling the air outlet assembly to operate in a first air outlet mode;
adjusting the inclination angle of the seat, wherein an adjusted inclination angle is greater than the inclination angle before the adjustment; or
controlling the multimedia assembly to make a sound used for indicating that the unmanned aerial vehicle prepares for takeoff.

6. The method according to claim 1 or any one of claims 3 to 5, wherein the adjusting the inclination angle of the seat comprises:
if it is sensed that the seat has a person, adjusting the inclination angle of the seat;
optionally wherein the sound is a timing sound of takeoff countdown.

7. The method according to claim **4,** wherein the on-board device comprises: the light emitting assembly, the air outlet assembly, the seat, and the multimedia assembly, and the target signal is used for indicating that the unmanned aerial vehicle is in the state of being taking off; and the controlling an operating status of an on-board device of the vehicle comprises at least one of the following steps:
emitting effect;
adjusting the inclination angle of the seat, wherein an adjusted inclination angle is greater than the inclination angle before the adjustment; or
controlling the multimedia assembly to make a sound simulating takeoff of the unmanned aerial vehicle.

8. The method according to claim **4,** wherein the on-board device comprises: the light emitting assembly, the air outlet assembly, and the multimedia assembly, and the target signal is used for indicating that the unmanned aerial vehicle is in the takeoff completed state; and the controlling an operating status of an on-board device of the vehicle comprises at least one of the following steps:
controlling the light emitting assembly to operate according to a third light emitting effect;
controlling the air outlet assembly to operate in a third air outlet mode, wherein the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed takeoff;
optionally the method further comprising: after receiving duration of the target signal reaches first duration, controlling the light emitting assembly to operate according to a fourth light emitting effect, wherein the fourth light emitting effect is a light emitting effect of the light emitting assembly before the unmanned aerial vehicle release instruction is obtained;
optionally wherein the on-board device comprises the seat, and the inclination angle of the seat is adjusted when the unmanned aerial vehicle is in the takeoff state; and the controlling an operating status of an on-board device of the vehicle further comprises:
restoring the inclination angle of the seat;
optionally wherein the multimedia assembly makes a sound simulating takeoff of the unmanned aerial vehicle when the unmanned aerial vehicle is in the state of being taking off;
and before the controlling the multimedia assembly to broadcast information used for indicating that the unmanned aerial vehicle has completed takeoff, the method further comprises: controlling the multimedia assembly to stop making the sound simulating takeoff of the unmanned aerial vehicle.

9. The method according to claim **4,** wherein the on-board device comprises: the air outlet assembly, and the target signal is used for indicating that the unmanned aerial vehicle is in the state of preparing for landing; and the controlling an operating status of an on-board device of the vehicle comprises:
controlling the air outlet assembly to operate in a fourth air outlet mode.

10. The method according to claim **4,** wherein the on-board device comprises: the light emitting assembly, the air outlet assembly, and the multimedia assembly, and the target signal is used for indicating that the unmanned aerial vehicle is in the state of being landing; and the controlling an operating status of an on-board device of the vehicle comprises at least one of the following steps:
controlling the light emitting assembly to operate according to a fifth light emitting effect;
controlling the air outlet assembly to operate in a fifth air outlet mode; or
controlling the multimedia assembly to make an alarm sound.

11. The method according to claim **4,** wherein the on-board device comprises: the light emitting assembly, the air outlet assembly, and the multimedia assembly; the target signal is used for indicating that the unmanned aerial vehicle is in the landing completed state; and the controlling an operating status of an on-board device of the vehicle comprises at least one of the following steps:
controlling the light emitting assembly to operate according to a third light emitting effect;
controlling the air outlet assembly to operate in a third air outlet mode, wherein the third air outlet mode is an air outlet mode of the air outlet assembly before the unmanned aerial vehicle is in the state of preparing for takeoff; or
controlling the multimedia assembly to broadcast information used for indicating that the unmanned aerial vehicle has completed landing;
optionally wherein the multimedia assembly makes an alarm sound when the unmanned aerial vehicle is in the state of being landing; before the controlling the multimedia assembly to broadcast information used for indicating that the unmanned aerial vehicle has completed landing, the method further comprises: controlling the multimedia assembly to stop making the alarm sound; and the controlling the multimedia assembly to broadcast information used for indicating that the unmanned aerial vehicle has completed landing comprises: after receiving duration of the target signal reaches second duration, controlling the multimedia assembly to broadcast the information used for indicating that the unmanned aerial vehicle has completed landing;
optionally the method further comprising: after receiving duration of the target signal reaches second duration, controlling the light emitting assembly to operate according to a fourth light emitting effect, wherein the fourth light emitting effect is a light emitting effect of the light emitting assembly before the unmanned aerial vehicle release instruction is obtained, and the fourth light emitting effect is different from the third light emitting effect.

12. The method according to claim 2, wherein the on-board device comprises: the light emitting assembly and the multimedia assembly, and the target signal is the unmanned aerial vehicle release instruction; and the controlling an operating status of an on-board device of the vehicle comprises at least one of the following steps:
controlling the light emitting assembly to operate according to a sixth light emitting effect;
or
controlling the multimedia assembly to broadcast information used for indicating that the unmanned aerial vehicle is being released and prompting to control the vehicle to be in a stationary state;
optionally after the target signal is received, the method further comprising: controlling the unmanned aerial vehicle to be powered on;
optionally after the controlling the unmanned aerial vehicle to be powered on, the method further comprising: after determining that the unmanned aerial vehicle establishes a communication connection with the vehicle, controlling the light emitting assembly to operate according to a seventh light emitting effect; and/or controlling the multimedia assembly to make a sound used for indicating that the connection succeeds.

13. The method according to claim 2, wherein the on-board device comprises: the light emitting assembly, and the target signal is the release cancellation instruction; and the controlling an operating status of an on-board device of the vehicle comprises:
controlling the light emitting assembly to operate according to a fourth light emitting effect,
wherein the fourth light emitting effect is a light emitting effect of the light emitting assembly before the unmanned aerial vehicle release instruction is obtained.

14. The method according to claim 3, wherein the on-board device comprises: the light emitting assembly and the multimedia assembly, and the target signal comprises: the return instruction and a state signal used for indicating that the unmanned aerial vehicle is in the flying state; and the controlling an operating status of an on-board device of the vehicle comprises at least one of the following steps:
light emitting effect; or
controlling the multimedia assembly to broadcast information used for indicating that the unmanned aerial vehicle prepares for returning.

15. The method according to claim 3, wherein the on-board device comprises: the light emitting assembly, and the target signal comprises: the return cancellation instruction and a state signal used for indicating that the unmanned aerial vehicle is in the flying state; and the controlling an operating status of an on-board device of the vehicle comprises:
controlling the light emitting assembly to operate according to a fourth light emitting effect,
wherein the fourth light emitting effect is a light emitting effect of the light emitting assembly before the unmanned aerial vehicle release instruction is obtained.

16. The method according to claim **4,** wherein the on-board device comprises: the light emitting assembly and the air outlet assembly, and the target signal comprises: the landing cancellation instruction and a state signal used for indicating that the unmanned aerial vehicle is in the state of being landing; and the controlling an operating status of an on-board device of the vehicle comprises at least one of the following steps:
controlling the light emitting assembly to operate according to a fourth light emitting effect;
or
controlling the air outlet assembly to operate in a third air outlet mode.

17. The method according to any one of claims 1 to 16, wherein the controlling an operating status of an on-board device of the vehicle after obtaining a target signal comprises:
obtaining a state of the vehicle after obtaining the target signal, wherein the state of the vehicle comprises: one of a stationary state or a driving state; and
controlling the operating status of the on-board device of the vehicle based on the state of the vehicle.

18. A controller (300), comprising: a memory, a processor, and a computer program stored on the memory and executable on the processor, the processor, when executing the computer program, implementing the method according to any one of claims 1 to 17.

19. A vehicle (100), comprising: an on-board device and the controller according to claim 18; optionally wherein the on-board device comprises: at least one of a light emitting assembly, an air outlet assembly, a seat, or a multimedia assembly.

20. A computer-readable storage medium, having a computer program stored therein, the computer program, when being executed by a processor, implementing the method according to any one of claims 1 to 17.

21. A control system, comprising: an unmanned aerial vehicle and the vehicle according to claim 19.

## Patentansprüche

1. Steuerungsverfahren für ein Fahrzeug (100), wobei das Verfahren Folgendes umfasst:
Steuern eines Betriebsstatus einer bordeigenen Vorrichtung des Fahrzeugs nach Erhalten eines Zielsignals,
wobei das Zielsignal Folgendes umfasst: ein Zustandssignal, das verwendet wird, um einen Zustand eines unbemannten Luftfahrzeugs (200) anzugeben, und/oder eine Steuerungsanweisung für eine Zielvorrichtung, und wobei die Zielvorrichtung zumindest das unbemannte Luftfahrzeug umfasst;
wobei die bordeigene Vorrichtung Folgendes umfasst: zumindest eines von: einer lichtemittierenden Baugruppe, die zumindest eines von einer Umgebungslampe, einer Leselampe oder einer Innenkuppellampe des Fahrzeugs umfasst; einer Luftauslassbaugruppe; einem Sitz; oder einer Multimediabaugruppe;
wobei ein Betriebsstatus der lichtemittierenden Baugruppe einen lichtemittierenden Effekt umfasst, ein Betriebsstatus der Luftauslassbaugruppe einen Luftauslassmodus umfasst, ein Betriebsstatus des Sitzes einen Neigungswinkel umfasst und ein Betriebsstatus der Multimediabaugruppe abgespielten Toninhalt umfasst; und
das Steuern eines Betriebsstatus einer bordeigenen Vorrichtung des Fahrzeugs zumindest einen der folgenden Schritte umfasst:
Steuern der lichtemittierenden Baugruppe, um gemäß einem voreingestellten lichtemittierenden Effekt zu arbeiten;
Steuern der Luftauslassbaugruppe, um in einem voreingestellten Luftauslassmodus zu arbeiten;
Einstellen des Neigungswinkels des Sitzes; oder
Steuern der Multimediabaugruppe, um einen Ton von voreingestelltem Inhalt zu erzeugen.

2. Verfahren gemäß Anspruch 1, wobei die Zielvorrichtung ferner Folgendes umfasst: einen Hangar, der auf einem Fahrzeugdach angeordnet und dazu konfiguriert ist, das unbemannte Luftfahrzeug aufzunehmen; und
eine Steuerungsanweisung für den Hangar Folgendes umfasst: eines von einer Freigabeanweisung des unbemannten Luftfahrzeugs oder einer Freigabeaufhebungsanweisung.

3. Verfahren gemäß Anspruch 1, wobei
eine Steuerungsanweisung für das unbemannte Luftfahrzeug Folgendes umfasst: eines von einer Rückkehranweisung, einer Rückkehraufhebungsanweisung oder einer Landeaufhebungsanweisung; und
der Zustand des unbemannten Luftfahrzeugs Folgendes umfasst: eines von einem Startzustand, einem Flugzustand oder einem Landezustand.

4. Verfahren gemäß Anspruch 3, wobei die Zielvorrichtung ferner Folgendes umfasst: einen Hangar, der auf einem Fahrzeugdach angeordnet und dazu konfiguriert ist, das unbemannte Luftfahrzeug aufzunehmen;
der Startzustand Folgendes umfasst: zumindest eines von einem Zustand des Vorbereitens auf den Start, einem Zustand des Startens oder einem Start-abgeschlossen-Zustand, wobei der Zustand des Vorbereitens auf den Start durch das Fahrzeug basierend auf einem Signal, das verwendet wird, um anzugeben, dass Freigeben des unbemannten Luftfahrzeugs abgeschlossen ist, und durch den Hangar gesendet wird, bestimmt wird; und
der Landezustand Folgendes umfasst: zumindest eines von einem Zustand des Vorbereitens auf die Landung, einem Zustand der Landung oder einem Landung-abgeschlossen-Zustand, wobei der Zustand des Vorbereitens auf die Landung an das Fahrzeug gesendet wird, nachdem das unbemannte Luftfahrzeug zu einer Zielposition zurückkehrt.

5. Verfahren gemäß Anspruch 4, wobei die bordeigene Vorrichtung Folgendes umfasst: die lichtemittierende Baugruppe, die Luftauslassbaugruppe, den Sitz und die Multimediabaugruppe, und das Zielsignal verwendet wird, um anzugeben, dass das unbemannte Luftfahrzeug in dem Zustand des Vorbereitens auf den Start ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem ersten lichtemittierenden Effekt zu arbeiten;
Steuern der Luftauslassbaugruppe, um in einem ersten Luftauslassmodus zu arbeiten;
Einstellen des Neigungswinkels des Sitzes, wobei ein eingestellter Neigungswinkel größer als der Neigungswinkel vor der Einstellung ist; oder
Steuern der Multimediabaugruppe, um einen Ton zu erzeugen, der verwendet wird, um anzugeben, dass sich das unbemannte Luftfahrzeug auf den Start vorbereitet.

6. Verfahren gemäß Anspruch 1 oder einem der Ansprüche 3 bis 5, wobei das Einstellen des Neigungswinkels des Sitzes Folgendes umfasst:
wenn erfasst wird, dass der Sitz eine Person aufweist, Einstellen des Neigungswinkels des Sitzes;
wobei optional der Ton ein Timing-Ton des Start-Countdowns ist.

7. Verfahren gemäß Anspruch 4, wobei die bordeigene Vorrichtung Folgendes umfasst: die lichtemittierende Baugruppe, die Luftauslassbaugruppe, den Sitz und die Multimediabaugruppe, und das Zielsignal verwendet wird, um anzugeben, dass das unbemannte Luftfahrzeug in dem Zustand des Startens ist; und das Steuern eines Betriebsstatus einer bordeigenen Vorrichtung des Fahrzeugs zumindest einen der folgenden Schritte umfasst:
Emittieren von Effekt;
Einstellen des Neigungswinkels des Sitzes, wobei ein eingestellter Neigungswinkel größer als der Neigungswinkel vor der Einstellung ist; oder
Steuern der Multimediabaugruppe, um einen Ton zu erzeugen, der Start des unbemannten Luftfahrzeugs simuliert.

8. Verfahren gemäß Anspruch 4, wobei die bordeigene Vorrichtung Folgendes umfasst: die lichtemittierende Baugruppe, die Luftauslassbaugruppe und die Multimediabaugruppe, und das Zielsignal verwendet wird, um anzugeben, dass das unbemannte Luftfahrzeug in dem Start-abgeschlossen-Zustand ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem dritten lichtemittierenden Effekt zu arbeiten;
Steuern der Luftauslassbaugruppe, um in einem dritten Luftauslassmodus zu arbeiten, wobei der dritte Luftauslassmodus ein Luftauslassmodus der Luftauslassbaugruppe ist, bevor das unbemannte Luftfahrzeug in dem Zustand des Vorbereitens auf den Start ist; oder
Steuern der Multimediabaugruppe, um Informationen zu übermitteln, die verwendet werden, um anzugeben, dass das unbemannte Luftfahrzeug den Start abgeschlossen hat;
wobei optional das Verfahren ferner Folgendes umfasst: nachdem Empfangsdauer des Zielsignals erste Dauer erreicht, Steuern der lichtemittierenden Baugruppe, um gemäß einem vierten lichtemittierenden Effekt zu arbeiten, wobei der vierte lichtemittierende Effekt ein lichtemittierender Effekt der lichtemittierenden Baugruppe ist, bevor die Freigabeanweisung des unbemannten Luftfahrzeugs erhalten wird;
wobei optional die bordeigene Vorrichtung den Sitz umfasst und der Neigungswinkel des Sitzes eingestellt wird, wenn das unbemannte Luftfahrzeug in dem Startzustand ist; und das Steuern eines Betriebsstatus einer bordeigenen Vorrichtung des Fahrzeugs ferner Folgendes umfasst:
Wiederherstellen des Neigungswinkels des Sitzes;
wobei optional die Multimediabaugruppe einen Ton erzeugt, der Start des unbemannten Luftfahrzeugs simuliert, wenn das unbemannte Luftfahrzeug in dem Zustand des Startens ist; und vor dem Steuern der Multimediabaugruppe, um Informationen zu übermitteln, die verwendet werden, um anzugeben, dass das unbemannte Luftfahrzeug den Start abgeschlossen hat, das Verfahren ferner Folgendes umfasst: Steuern der Multimediabaugruppe, um das Erzeugen des Tons, der Start des unbemannten Luftfahrzeugs simuliert, zu stoppen.

9. Verfahren gemäß Anspruch 4, wobei die bordeigene Vorrichtung Folgendes umfasst: die Luftauslassbaugruppe, und das Zielsignal verwendet wird, um anzugeben, dass das unbemannte Luftfahrzeug in dem Zustand des Vorbereitens auf die Landung ist; und das Steuern eines Betriebsstatus einer bordeigenen Vorrichtung des Fahrzeugs Folgendes umfasst:
Steuern der Luftauslassbaugruppe, um in einem vierten Luftauslassmodus zu arbeiten.

10. Verfahren gemäß Anspruch 4, wobei die bordeigene Vorrichtung Folgendes umfasst: die lichtemittierende Baugruppe, die Luftauslassbaugruppe und die Multimediabaugruppe, und das Zielsignal verwendet wird, um anzugeben, dass das unbemannte Luftfahrzeug in dem Zustand der Landung ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem fünften lichtemittierenden Effekt zu arbeiten;
Steuern der Luftauslassbaugruppe, um in einem fünften Luftauslassmodus zu arbeiten;
oder
Steuern der Multimediabaugruppe, um einen Alarmton zu erzeugen.

11. Verfahren gemäß Anspruch 4, wobei die bordeigene Vorrichtung Folgendes umfasst: die lichtemittierende Baugruppe, die Luftauslassbaugruppe und die Multimediabaugruppe; das Zielsignal verwendet wird, um anzugeben, dass das unbemannte Luftfahrzeug in dem Landungabgeschlossen-Zustand ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem dritten lichtemittierenden Effekt zu arbeiten;
Steuern der Luftauslassbaugruppe, um in einem dritten Luftauslassmodus zu arbeiten, wobei der dritte Luftauslassmodus ein Luftauslassmodus der Luftauslassbaugruppe ist, bevor das unbemannte Luftfahrzeug in dem Zustand des Vorbereitens auf den Start ist; oder
Steuern der Multimediabaugruppe, um Informationen zu übermitteln, die verwendet werden, um anzugeben, dass das unbemannte Luftfahrzeug die Landung abgeschlossen hat;
wobei optional die Multimediabaugruppe einen Alarmton erzeugt, wenn das unbemannte Luftfahrzeug in dem Zustand der Landung ist; wobei vor dem Steuern der Multimediabaugruppe, um Informationen zu übermitteln, die verwendet werden, um anzugeben, dass das unbemannte Luftfahrzeug die Landung abgeschlossen hat, das Verfahren ferner Folgendes umfasst: Steuern der Multimediabaugruppe, um das Erzeugen des Alarmtons zu stoppen; und das Steuern der Multimediabaugruppe, um Informationen zu übermitteln, die verwendet werden, um anzugeben, dass das unbemannte Luftfahrzeug die Landung abgeschlossen hat, Folgendes umfasst: nachdem Empfangsdauer des Zielsignals zweite Dauer erreicht, Steuern der Multimediabaugruppe, um die Informationen zu übermitteln, die verwendet werden, um anzugeben, dass das unbemannte Luftfahrzeug die Landung abgeschlossen hat;
wobei optional das Verfahren ferner Folgendes umfasst: nachdem Empfangsdauer des Zielsignals zweite Dauer erreicht, Steuern der lichtemittierenden Baugruppe, um gemäß einem vierten lichtemittierenden Effekt zu arbeiten, wobei der vierte lichtemittierende Effekt ein lichtemittierender Effekt der lichtemittierenden Baugruppe ist, bevor die Freigabeanweisung des unbemannten Luftfahrzeugs erhalten wird, und sich der vierte lichtemittierende Effekt von dem dritten lichtemittierenden Effekt unterscheidet.

12. Verfahren gemäß Anspruch 2, wobei die bordeigene Vorrichtung Folgendes umfasst: die lichtemittierende Baugruppe und die Multimediabaugruppe, und das Zielsignal die Freigabeanweisung des unbemannten Luftfahrzeugs ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem sechsten lichtemittierenden Effekt zu arbeiten; oder
Steuern der Multimediabaugruppe, um Informationen zu übermitteln, die verwendet werden, um anzugeben, dass das unbemannte Luftfahrzeug freigegeben wird, und Auffordern, das Fahrzeug zu steuern, um in einem stationären Zustand zu sein;
wobei optional, nachdem das Zielsignal empfangen ist, das Verfahren ferner Folgendes umfasst: Steuern des unbemannten Luftfahrzeugs, um eingeschaltet zu sein;
wobei optional nach dem Steuern des unbemannten Luftfahrzeugs, um eingeschaltet zu sein, das Verfahren ferner Folgendes umfasst: nach dem Bestimmen, dass das unbemannte Luftfahrzeug eine Kommunikationsverbindung mit dem Fahrzeug aufbaut, Steuern der lichtemittierenden Baugruppe, um gemäß einem siebten lichtemittierenden Effekt zu arbeiten; und/oder Steuern der Multimediabaugruppe, um einen Ton zu erzeugen, der verwendet wird, um anzugeben, dass die Verbindung erfolgreich ist.

13. Verfahren gemäß Anspruch 2, wobei die bordeigene Vorrichtung Folgendes umfasst: die lichtemittierende Baugruppe, und das Zielsignal die Freigabeaufhebungsanweisung ist; und das Steuern eines Betriebsstatus einer bordeigenen Vorrichtung des Fahrzeugs Folgendes umfasst:
Steuern der lichtemittierenden Baugruppe, um gemäß einem vierten lichtemittierenden Effekt zu arbeiten,
wobei der vierte lichtemittierende Effekt ein lichtemittierender Effekt der lichtemittierenden Baugruppe ist, bevor die Freigabeanweisung des unbemannten Luftfahrzeugs erhalten wird.

14. Verfahren gemäß Anspruch 3, wobei die bordeigene Vorrichtung Folgendes umfasst: die lichtemittierende Baugruppe und die Multimediabaugruppe, und das Zielsignal Folgendes umfasst: die Rückkehranweisung und ein Zustandssignal, das verwendet wird, um anzugeben, dass das unbemannte Luftfahrzeug in dem Flugzustand ist; und das Steuern eines Betriebsstatus einer bordeigenen Vorrichtung des Fahrzeugs zumindest einen der folgenden Schritte umfasst:
lichtemittierender Effekt; oder
Steuern der Multimediabaugruppe, um Informationen zu übermitteln, die verwendet werden, um anzugeben, dass sich das unbemannte Luftfahrzeug auf die Rückkehr vorbereitet.

15. Verfahren gemäß Anspruch 3, wobei die bordeigene Vorrichtung Folgendes umfasst: die lichtemittierende Baugruppe, und das Zielsignal Folgendes umfasst: die Rückkehraufhebungsanweisung und ein Zustandssignal, das verwendet wird, um anzugeben, dass das unbemannte Luftfahrzeug in dem Flugzustand ist; und das Steuern eines Betriebsstatus einer bordeigenen Vorrichtung des Fahrzeugs Folgendes umfasst:
Steuern der lichtemittierenden Baugruppe, um gemäß einem vierten lichtemittierenden Effekt zu arbeiten,
wobei der vierte lichtemittierende Effekt ein lichtemittierender Effekt der lichtemittierenden Baugruppe ist, bevor die Freigabeanweisung des unbemannten Luftfahrzeugs erhalten wird.

16. Verfahren gemäß Anspruch 4, wobei die bordeigene Vorrichtung Folgendes umfasst: die lichtemittierende Baugruppe und die Luftauslassbaugruppe, und das Zielsignal Folgendes umfasst: die Landungsaufhebungsanweisung und ein Zustandssignal, das verwendet wird, um anzugeben, dass das unbemannte Luftfahrzeug in dem Zustand der Landung ist; und das Steuern eines Betriebsstatus einer bordeigenen Vorrichtung des Fahrzeugs zumindest einen der folgenden Schritte umfasst:
Steuern der lichtemittierenden Baugruppe, um gemäß einem vierten lichtemittierenden Effekt zu arbeiten; oder
Steuern der Luftauslassbaugruppe, um in einem dritten Luftauslassmodus zu arbeiten.

17. Verfahren gemäß einem der Ansprüche 1 bis 16, wobei das Steuern eines Betriebsstatus einer bordeigenen Vorrichtung des Fahrzeugs nach dem Erhalten eines Zielsignals Folgendes umfasst:
Erhalten eines Zustands des Fahrzeugs nach dem Erhalten des Zielsignals, wobei der Zustand des Fahrzeugs Folgendes umfasst: eines von einem stationären Zustand oder einem Antriebszustand; und
Steuern des Betriebsstatus der bordeigenen Vorrichtung des Fahrzeugs basierend auf dem Zustand des Fahrzeugs.

18. Steuerung (300), umfassend: einen Speicher, einen Prozessor und ein Computerprogramm, das auf dem Speicher gespeichert und auf dem Prozessor ausführbar ist, wobei der Prozessor, wenn er das Computerprogramm ausführt, das Verfahren gemäß einem der Ansprüche 1 bis 17 implementiert.

19. Fahrzeug (100), umfassend: eine bordeigene Vorrichtung und die Steuerung gemäß Anspruch 18; wobei optional die bordeigene Vorrichtung Folgendes umfasst: zumindest eines von einer lichtemittierenden Baugruppe, einer Luftauslassbaugruppe, einem Sitz oder einer Multimediabaugruppe.

20. Computerlesbares Speichermedium mit einem darauf gespeicherten Computerprogramm, wobei das Computerprogramm, wenn durch einen Prozessor ausgeführt, das Verfahren gemäß einem der Ansprüche 1 bis 17 implementiert.

21. Steuerungssystem, umfassend: ein unbemanntes Luftfahrzeug und das Fahrzeug gemäß Anspruch 19.

## Revendications

1. Procédé de commande pour un véhicule (100), le procédé comprenant :
la commande d'un état de fonctionnement d'un dispositif embarqué du véhicule après l'obtention d'un signal cible,
le signal cible comprenant : un signal d'état utilisé pour indiquer un état d'un véhicule aérien sans pilote (200), et/ou une instruction de commande pour un dispositif cible, et le dispositif cible comprenant au moins le véhicule aérien sans pilote ;
ledit dispositif embarqué comprenant : au moins un parmi : un ensemble d'émission de lumière comprenant au moins l'un d'une lampe d'atmosphère, d'une lampe de lecture ou d'une lampe de dôme intérieur du véhicule ; un ensemble de sortie d'air ; un siège ; ou un ensemble multimédia ;
un état de fonctionnement de l'ensemble d'émission de lumière comprenant un effet d'émission de lumière, un état de fonctionnement de l'ensemble de sortie d'air comprenant un mode de sortie d'air, un état de fonctionnement du siège comprenant un angle d'inclinaison, et un état de fonctionnement de l'ensemble multimédia comprenant un contenu sonore lu ; et
ladite commande d'un état de fonctionnement d'un dispositif embarqué du véhicule comprenant au moins l'une des étapes suivantes :
la commande de l'ensemble d'émission de lumière pour qu'il fonctionne selon un effet d'émission de lumière prédéfini ;
la commande de l'ensemble de sortie d'air pour qu'il fonctionne dans un mode de sortie d'air prédéfini ;
le réglage de l'angle d'inclinaison du siège ; ou
la commande de l'ensemble multimédia pour produire un son de contenu prédéfini.

2. Procédé selon la revendication 1, ledit dispositif cible comprenant en outre : un abri agencé sur un toit de véhicule et conçu pour accueillir le véhicule aérien sans pilote ; et
une instruction de commande pour l'abri comprenant : une instruction de libération de véhicule aérien sans pilote ou une instruction d'annulation de libération.

3. Procédé selon la revendication 1,
une instruction de commande pour le véhicule aérien sans pilote comprenant : l'une d'une instruction de retour, d'une instruction d'annulation de retour ou d'une instruction d'annulation d'atterrissage ; et
ledit état du véhicule aérien sans pilote comprenant : l'un d'un état de décollage, d'un état de vol ou d'un état d'atterrissage.

4. Procédé selon la revendication 3, ledit dispositif cible comprenant en outre : un abri agencé sur un toit de véhicule et conçu pour recevoir le véhicule aérien sans pilote ;
ledit état de décollage comprenant : au moins l'un d'un état de préparation au décollage, d'un état de décollage en cours, ou d'un état de décollage terminé, ledit état de préparation au décollage étant déterminé par le véhicule sur la base d'un signal utilisé pour indiquer que la libération du véhicule aérien sans pilote est terminée et envoyé par l'abri ; et
ledit état d'atterrissage comprenant : au moins l'un d'un état de préparation à l'atterrissage, d'un état d'atterrissage en cours ou d'un état d'atterrissage terminé, ledit état de préparation à l'atterrissage étant envoyé au véhicule après le retour du véhicule aérien sans pilote à une position cible.

5. Procédé selon la revendication 4, ledit dispositif embarqué comprenant : l'ensemble d'émission de lumière, l'ensemble de sortie d'air, le siège et l'ensemble multimédia, et ledit signal cible étant utilisé pour indiquer que le véhicule aérien sans pilote est dans l'état de préparation au décollage ; et ladite commande d'un état de fonctionnement d'un dispositif embarqué du véhicule comprenant au moins l'une des étapes suivantes :
la commande de l'ensemble d'émission de lumière pour qu'il fonctionne selon un premier effet d'émission de lumière ; la commande de l'ensemble de sortie d'air pour qu'il fonctionne dans un premier mode de sortie d'air ;
le réglage de l'angle d'inclinaison du siège, un angle d'inclinaison réglé étant supérieur à l'angle d'inclinaison avant le réglage ; ou
la commande de l'ensemble multimédia pour produire un son utilisé pour indiquer que le véhicule aérien sans pilote se prépare au décollage.

6. Procédé selon la revendication 1 ou l'une quelconque des revendications 3 à 5, ledit réglage de l'angle d'inclinaison du siège comprenant :
si la présence d'une personne sur le siège est détectée, ledit réglage de l'angle d'inclinaison du siège ; éventuellement, ledit son étant un son de synchronisation du compte à rebours de décollage.

7. Procédé selon la revendication 4, ledit dispositif embarqué comprenant : l'ensemble d'émission de lumière, l'ensemble de sortie d'air, le siège et l'ensemble multimédia, et ledit signal cible étant utilisé pour indiquer que le véhicule aérien sans pilote est dans l'état de décollage en cours ; et ladite commande d'un état de fonctionnement d'un dispositif embarqué du véhicule comprenant au moins l'une des étapes suivantes : l'émission d'effet ;
le réglage de l'angle d'inclinaison du siège, un angle d'inclinaison réglé étant supérieur à l'angle d'inclinaison avant le réglage ; ou
la commande de l'ensemble multimédia pour produire un son simulant le décollage du véhicule aérien sans pilote.

8. Procédé selon la revendication 4, ledit dispositif embarqué comprenant : l'ensemble d'émission de lumière, l'ensemble de sortie d'air et l'ensemble multimédia, et ledit signal cible étant utilisé pour indiquer que le véhicule aérien sans pilote est dans l'état de décollage terminé ; et ladite commande d'un état de fonctionnement d'un dispositif embarqué du véhicule comprenant au moins l'une des étapes suivantes :
la commande de l'ensemble d'émission de lumière pour qu'il fonctionne selon un troisième effet d'émission de lumière ;
la commande de l'ensemble de sortie d'air pour qu'il fonctionne dans un troisième mode de sortie d'air, ledit troisième mode de sortie d'air étant un mode de sortie d'air de l'ensemble de sortie d'air avant que le véhicule aérien sans pilote ne soit dans l'état de préparation au décollage ; ou
la commande de l'ensemble multimédia pour diffuser des informations utilisées pour indiquer que le véhicule aérien sans pilote a terminé le décollage ;
éventuellement, le procédé comprenant en outre : après que la durée de réception du signal cible a atteint la première durée, la commande de l'ensemble d'émission de lumière pour qu'il fonctionne selon un quatrième effet d'émission de lumière, ledit quatrième effet d'émission de lumière étant un effet d'émission de lumière de l'ensemble d'émission de lumière avant que l'instruction de libération de véhicule aérien sans pilote ne soit obtenue ;
éventuellement, ledit dispositif embarqué comprenant le siège, et l'angle d'inclinaison du siège étant réglé lorsque le véhicule aérien sans pilote est dans l'état de décollage ; et ladite commande d'un état de fonctionnement d'un dispositif embarqué du véhicule comprenant en outre :
la restauration de l'angle d'inclinaison du siège ;
éventuellement, ledit ensemble multimédia produisant un son simulant le décollage du véhicule aérien sans pilote lorsque le véhicule aérien sans pilote est dans l'état de décollage ; et avant la commande de l'ensemble multimédia pour diffuser des informations utilisées pour indiquer que le véhicule aérien sans pilote a terminé le décollage, ledit procédé comprenant en outre : la commande de l'ensemble multimédia pour arrêter de produire le son simulant le décollage du véhicule aérien sans pilote.

9. Procédé selon la revendication 4, ledit dispositif embarqué comprenant : l'ensemble de sortie d'air, et le signal cible étant utilisé pour indiquer que le véhicule aérien sans pilote est dans l'état de préparation à l'atterrissage ; et ladite commande d'un état de fonctionnement d'un dispositif embarqué du véhicule comprenant :
la commande de l'ensemble de sortie d'air pour qu'il fonctionne dans un quatrième mode de sortie d'air.

10. Procédé selon la revendication 4, ledit dispositif embarqué comprenant : l'ensemble d'émission de lumière, l'ensemble de sortie d'air et l'ensemble multimédia, et ledit signal cible étant utilisé pour indiquer que le véhicule aérien sans pilote est dans l'état d'atterrissage en cours ; et ladite commande d'un état de fonctionnement d'un dispositif embarqué du véhicule comprenant au moins l'une des étapes suivantes :
la commande de l'ensemble d'émission de lumière pour qu'il fonctionne selon un cinquième effet d'émission de lumière ;
la commande de l'ensemble de sortie d'air pour qu'il fonctionne dans un cinquième mode de sortie d'air ; ou la commande de l'ensemble multimédia pour produire un son d'alarme.

11. Procédé selon la revendication 4, ledit dispositif embarqué comprenant : l'ensemble d'émission de lumière, l'ensemble de sortie d'air et l'ensemble multimédia ; le signal cible étant utilisé pour indiquer que le véhicule aérien sans pilote est dans l'état d'atterrissage terminé ; et la commande d'un état de fonctionnement d'un dispositif embarqué du véhicule comprenant au moins l'une des étapes suivantes :
la commande de l'ensemble d'émission de lumière pour qu'il fonctionne selon un troisième effet d'émission de lumière ;
la commande de l'ensemble de sortie d'air pour qu'il fonctionne dans un troisième mode de sortie d'air, ledit troisième mode de sortie d'air étant un mode de sortie d'air de l'ensemble de sortie d'air avant que le véhicule aérien sans pilote ne soit dans l'état de préparation au décollage ; ou
la commande de l'ensemble multimédia pour diffuser des informations utilisées pour indiquer que le véhicule aérien sans pilote a terminé l'atterrissage ;
éventuellement, ledit ensemble multimédia produisant un son d'alarme lorsque le véhicule aérien sans pilote est dans l'état d'atterrissage en cours ; avant la commande de l'ensemble multimédia pour diffuser des informations utilisées pour indiquer que le véhicule aérien sans pilote a terminé l'atterrissage, ledit procédé comprenant en outre : la commande de l'ensemble multimédia pour arrêter de produire le son d'alarme ; et la commande de l'ensemble multimédia pour diffuser des informations utilisées pour indiquer que le véhicule aérien sans pilote a terminé l'atterrissage comprenant : après que la durée de réception du signal cible a atteint une seconde durée, la commande de l'ensemble multimédia pour diffuser les informations utilisées pour indiquer que le véhicule aérien sans pilote a terminé l'atterrissage ;
éventuellement, le procédé comprenant en outre : après que la durée de réception du signal cible a atteint la seconde durée, la commande de l'ensemble d'émission de lumière pour qu'il fonctionne selon un quatrième effet d'émission de lumière, ledit quatrième effet d'émission de lumière étant un effet d'émission de lumière de l'ensemble d'émission de lumière avant que l'instruction de libération de véhicule aérien sans pilote ne soit obtenue, et ledit quatrième effet d'émission de lumière étant différent du troisième effet d'émission de lumière.

12. Procédé selon la revendication 2, ledit dispositif embarqué comprenant : l'ensemble d'émission de lumière et l'ensemble multimédia, et ledit signal cible étant l'instruction de libération du véhicule aérien sans pilote ; et ladite commande d'un état de fonctionnement d'un dispositif embarqué du véhicule comprenant au moins l'une des étapes suivantes :
la commande de l'ensemble d'émission de lumière pour qu'il fonctionne selon un sixième effet d'émission de lumière ;
ou
la commande de l'ensemble multimédia pour diffuser des informations utilisées pour indiquer que le véhicule aérien sans pilote est en cours de libération et pour inviter à commander le véhicule pour qu'il soit dans un état stationnaire ;
éventuellement après la réception du signal cible, le procédé comprenant en outre : la commande du véhicule aérien sans pilote pour qu'il soit mis en marche ;
éventuellement après la commande du véhicule aérien sans pilote pour qu'il soit mis en marche, le procédé comprenant en outre : après avoir déterminé que le véhicule aérien sans pilote établit une connexion de communication avec le véhicule, la commande de l'ensemble d'émission de lumière pour qu'il fonctionne selon un septième effet d'émission de lumière ; et/ou la commande de l'ensemble multimédia pour qu'il produise un son utilisé pour indiquer que la connexion a abouti.

13. Procédé selon la revendication 2, ledit dispositif embarqué comprenant : l'ensemble d'émission de lumière, et ledit signal cible étant l'instruction d'annulation de libération ; et ladite commande d'un état de fonctionnement d'un dispositif embarqué du véhicule comprenant :
la commande de l'ensemble d'émission de lumière pour qu'il fonctionne selon un quatrième effet d'émission de lumière, ledit quatrième effet d'émission de lumière étant un effet d'émission de lumière de l'ensemble d'émission de lumière avant que l'instruction de libération de véhicule aérien sans pilote ne soit obtenue.

14. Procédé selon la revendication 3, ledit dispositif embarqué comprenant : l'ensemble d'émission de lumière et l'ensemble multimédia, et ledit signal cible comprenant : l'instruction de retour et un signal d'état utilisé pour indiquer que le véhicule aérien sans pilote est dans l'état de vol ; et ladite commande d'un état de fonctionnement d'un dispositif embarqué du véhicule comprenant au moins l'une des étapes suivantes : effet d'émission de lumière ; ou
la commande de l'ensemble multimédia pour diffuser des informations utilisées pour indiquer que le véhicule aérien sans pilote se prépare pour le retour.

15. Procédé selon la revendication 3, ledit dispositif embarqué comprenant : l'ensemble d'émission de lumière, et ledit signal cible comprenant : l'instruction d'annulation de retour et un signal d'état utilisé pour indiquer que le véhicule aérien sans pilote est dans l'état de vol ; et ladite commande d'un état de fonctionnement d'un dispositif embarqué du véhicule comprenant :
la commande de l'ensemble d'émission de lumière pour qu'il fonctionne selon un quatrième effet d'émission de lumière, ledit quatrième effet d'émission de lumière étant un effet d'émission de lumière de l'ensemble d'émission de lumière avant que l'instruction de libération de véhicule aérien sans pilote ne soit obtenue.

16. Procédé selon la revendication 4, ledit dispositif embarqué comprenant : l'ensemble d'émission de lumière et l'ensemble de sortie d'air, et ledit signal cible comprenant : l'instruction d'annulation d'atterrissage et un signal d'état utilisé pour indiquer que le véhicule aérien sans pilote est dans l'état d'atterrissage en cours ; et ladite commande d'un état de fonctionnement d'un dispositif embarqué du véhicule comprenant au moins l'une des étapes suivantes :
la commande de l'ensemble d'émission de lumière pour qu'il fonctionne selon un quatrième effet d'émission de lumière ;
ou
la commande de l'ensemble de sortie d'air pour qu'il fonctionne dans un troisième mode de sortie d'air.

17. Procédé selon l'une quelconque des revendications 1 à 16, ladite commande d'un état de fonctionnement d'un dispositif embarqué du véhicule après l'obtention d'un signal cible comprenant :
l'obtention d'un état du véhicule après l'obtention du signal cible, ledit état du véhicule comprenant : l'un d'un état stationnaire ou d'un état de conduite ; et
la commande de l'état de fonctionnement du dispositif embarqué du véhicule sur la base de l'état du véhicule.

18. Dispositif de commande (300), comprenant : une mémoire, un processeur et un programme informatique stocké dans la mémoire et exécutable sur le processeur, le processeur, lors de l'exécution du programme informatique, mettant en œuvre le procédé selon l'une quelconque des revendications 1 à 17.

19. Véhicule (100), comprenant : un dispositif embarqué et le dispositif de commande selon la revendication 18 ; éventuellement, ledit dispositif embarqué comprenant : au moins l'un d'un ensemble d'émission de lumière, d'un ensemble de sortie d'air, d'un siège ou d'un ensemble multimédia.

20. Support de stockage lisible par ordinateur, dans lequel est stocké un programme informatique, le programme informatique, lorsqu'il est exécuté par un processeur, mettant en œuvre le procédé selon l'une quelconque des revendications 1 à 17.

21. Système de commande, comprenant : un véhicule aérien sans pilote et le véhicule selon la revendication 19.
